(19) **Europäisches Patentamt / European Patent Office / Office européen des brevets**

(11) **EP 3 852 168 A1**

(12) **EUROPEAN PATENT APPLICATION**
published in accordance with Art. 153(4) EPC

(43) Date of publication:
21.07.2021 Bulletin 2021/29

(21) Application number: 19859334.5

(22) Date of filing: 06.09.2019

(51) Int Cl.:
*H01M 4/131* (2010.01)   *H01M 4/525* (2010.01)
*H01M 4/62* (2006.01)

(86) International application number:
PCT/JP2019/035201

(87) International publication number:
WO 2020/054615 (19.03.2020 Gazette 2020/12)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
KH MA MD TN

(30) Priority: 10.09.2018 JP 2018168778
13.03.2019 JP 2019045449

(71) Applicant: **Toray Industries, Inc.**
**Tokyo, 103-8666 (JP)**

(72) Inventors:
• **KONISHI, Takashi**
**Otsu-shi, Shiga 520-8558 (JP)**
• **TAMAKI, Eiichiro**
**Otsu-shi, Shiga 520-8558 (JP)**

(74) Representative: **Kador & Partner PartG mbB**
**Corneliusstraße 15**
**80469 München (DE)**

(54) **ELECTRODE FOR SECONDARY BATTERY AND SECONDARY BATTERY**

(57)     An object of the present invention is to obtain an electrode for secondary battery capable of realizing a secondary battery having a high output and a long lifespan using a small amount of conductive auxiliary. The present invention is an electrode for secondary battery which has a mixture layer containing graphene and active material particles for secondary battery containing at least lithium and nickel and in which an average aspect ratio of conductive material portions in a cross section of the electrode for secondary battery identified by the following method is 2.0 or more: the method for identifying a conductive material portion: (1) a spreading resistance value at a mixture layer portion is acquired by scanning spreading resistance microscopy, and (2) a total data number of the spreading resistance values is taken as N, the spreading resistance values are sorted in ascending order, and a 0.1Nth spreading resistance value (rounded down to a nearest decimal point of 0.1N) is taken as R, and binarization processing is performed on two-dimensional data of a spreading resistance value using 0.7R as a threshold value and a portion having a resistance value of 0.7R or less in a binarized image attained is taken as a conductive material portion.

4

10 µm

Figure 8

EP 3 852 168 A1

**Description**

TECHNICAL FIELD

The present invention relates to an electrode for secondary batteries such as a lithium ion battery and an all-solid-state battery, and a secondary battery.

BACKGROUND ART

In recent years, research and development of secondary batteries such as lithium ion batteries and all-solid-state batteries have been actively carried out for portable equipment such as smartphones and portable telephones, hybrid vehicles, electric vehicles, and household power storage applications. Materials exhibiting poor electron conductivity such as metal oxides are used as active materials for secondary batteries, and thus electrodes to which conductive auxiliaries such as carbon materials are added in addition to the active materials are used in order to impart electron conductivity.

One of major problems of secondary batteries is to improve the lifespan, that is, to maintain the battery capacity when charge and discharge are repeated. One of causes of the decrease in battery capacity due to repeated use is the decrease in electron conductivity. There is no problem with electron conductivity at the initial stage since the electrodes are tightly packed, but as charge and discharge are repeated, the active material expands and contracts and voids are formed in the electrode as well as a film of insulator due to the decomposition product with the electrolytic solution is formed, the electron conductivity thus extremely decreases, and as a result, the battery capacity decreases. In order to prevent such a decrease in battery capacity, it is considered important to form a conductive network which firmly connects the active materials to each other at the initial stage and to maintain this network against the expansion and contraction of active materials.

In order to solve this problem, Patent Document 1 proposes to improve the conductive network by regulating the average particle size, average area, and aspect ratio of the aggregates of conductive auxiliary attained by image analysis of the surface photograph of negative electrode acquired using a scanning electron microscope in certain ranges.

Patent Document 2 proposes to improve the conductive network by regulating the size and distribution state of the aggregates of conductive auxiliary attained by analysis of the carbon mapping image of the electrode cross section and the resistance value of electrode in certain ranges.

An electrode for lithium ion battery containing a graphene composition containing thiourea having an element ratio of sulfur to carbon of 0.04 or more and 0.12 or less, an electrode active material, and a binder (see, for example, Patent Document 3), an electrode which has an active material-containing layer containing active material particles including a metal oxide and a conductive agent and in which the weighted average value of roundness of the particles contained in the region having a resistance value of 1 MΩ or less attributed to the conductive agent is 0.05 or more and 0.4 or less and the weighted average value of roundness is weighted by the area of the particles (see, for example, Patent Document 4), and the like have been proposed.

PRIOR ART DOCUMENTS

PATENT DOCUMENTS

Patent Document 1: Japanese Patent Laid-Open Publication No. 2012-14838
Patent Document 2: Japanese Patent Laid-Open Publication No. 2015-215947
Patent Document 3: National Publication of International Patent Application No. 2016-500895
Patent Document 4: Japanese Patent Laid-Open Publication No. 2018-160418

SUMMARY OF THE INVENTION

PROBLEMS TO BE SOLVED BY THE INVENTION

In Patent Document 1, since a carbon material in a state in which primary particles are aggregated is used, the carbon material exists as an aggregate even in the electrode. When the aggregates exist in the electrode as a lump larger than a certain range, the proportion of the portion at which the active material and the conductive auxiliary do not come into contact with each other increases, and the electronic resistance on the surface of active material increases, and thus the output of the battery decreases. When the aggregates exist as a lump in this manner, the capacity is extremely decreased by repeated use.

In Patent Document 2, since carbon black that is an aggregate of secondary particles is used, the maximum cross-sectional area of the aggregate is as extremely large as 400 $\mu m^2$ or more and 1000 $\mu m^2$ or less, the proportion of the portion at which the conductive auxiliary does not exist is still great, and thus the output characteristics of the battery decrease. The capacity is extremely decreased by repeated use.

In the electrode described in Patent Document 3, the output characteristics and lifespan can be improved by graphene exhibiting high conductivity and high dispersibility, but short-distance conductive networks connecting active materials or conductive auxiliaries to each other are still insufficient in order to cope with the increase in capacity of secondary batteries in recent years, and further increases in output and lifespan are required. On the other hand, in the electrodes described in Patent Document 4, a conductive network having a low roundness (high aspect ratio) is formed using functionalized graphene or carbon nanotubes, but there is still a problem that the output characteristics and lifespan are insufficient.

An object of the present invention is to provide an electrode for secondary battery having improved output and lifespan.

SOLUTIONS TO THE PROBLEMS

The present invention for solving the above problems is

an electrode for secondary battery which has a mixture layer containing graphene and active material particles for secondary battery containing at least lithium and nickel and in which

an average aspect ratio of conductive material portions in a cross section of the electrode for secondary battery identified by the following method is 2.0 or more.

The method for identifying a conductive material portion:

(1) a spreading resistance value at a mixture layer portion is acquired by scanning spreading resistance microscopy.
(2) a total data number of the spreading resistance values is taken as N, the spreading resistance values are sorted in ascending order, and a 0.1Nth spreading resistance value (rounded down to a nearest decimal point of 0.1N) is taken as R, and

binarization processing is performed on two-dimensional data of a spreading resistance value using 0.7R as a threshold value and a portion having a resistance value of 0.7R or less in a binarized image attained is taken as a conductive material portion.

EFFECTS OF THE INVENTION

According to the present invention, it is possible to obtain an electrode for secondary battery capable of realizing a secondary battery having a high output and a long lifespan.

BRIEF DESCRIPTION OF THE DRAWINGS

Fig. 1 is a mapping image of an electrode for secondary battery fabricated in Example 1-1.
Fig. 2 is a binarized image of an electrode for secondary battery fabricated in Example 1-1.
Fig. 3 is a mapping image of an electrode for secondary battery fabricated in Example 1-2.
Fig. 4 is a binarized image of an electrode for secondary battery fabricated in Example 1-2.
Fig. 5 is a mapping image of an electrode for secondary battery fabricated in Comparative Example 1-1.
Fig. 6 is a binarized image of an electrode for secondary battery fabricated in Comparative Example 1-1.
Fig. 7 is a mapping image of an electrode for secondary battery fabricated in Example 2-1.
Fig. 8 is a binarized image of an electrode for secondary battery fabricated in Example 2-1.
Fig. 9 is a model diagram of mapping of an electrode for secondary battery fabricated in Example 2-1.
Fig. 10 is a binarized image of an electrode for secondary battery fabricated in Comparative Example 2-2.

EMBODIMENTS OF THE INVENTION

<Electrode for secondary battery>

The electrode for secondary battery of the present invention (hereinafter, simply referred to as "electrode" in some cases) has a mixture layer containing graphene and active material particles for secondary battery.

[Graphene]

In the electrode for secondary battery of the present invention, graphene that is thin, has a plane shape, has a large number of conductive paths per unit weight, and easily forms a firm conductive network in the electrode is used as a conductive auxiliary. Graphene refers to a sheet (single-layered graphene) of $sp^2$-bonded carbon atoms having a thickness of one atom in a narrow sense but is a name for those having a flaky form in which single-layered graphene is laminated as well in the present specification. Similarly, graphene oxide is also a name for those having a laminated flaky form as well.

The thickness of graphene used in the present invention is not particularly limited but is preferably 100 nm or less, more preferably 50 nm or less, still more preferably 20 nm or less. When the thickness of graphene is 100 nm or less, graphene exhibits improved flexibility, easily comes into contact with the active material particles for secondary battery on the face, and thus can form a firmer conductive network. As the thickness of graphene, the value determined as follows is used. First, graphene separated from the mixture layer by the method described later is diluted to 0.002% by mass with N-methylpyrrolidone (NMP), dropped on a glass substrate, and dried. Thereafter, graphene on the substrate is observed under a laser microscope capable of measuring the three-dimensional shape, and the thickness of individual graphene is measured. When there is variation in the thickness of individual graphene, the area average is determined. The thicknesses of 50 graphenes are randomly calculated, and the average value thereof is taken as the thickness of graphene.

The size of graphene in the plane direction is not particularly limited, but the lower limit thereof is preferably 0.5 $\mu$m or more, more preferably 0.7 $\mu$m or more, still more preferably 1.0 $\mu$m or more, and the upper limit thereof is preferably 50 $\mu$m or less, more preferably 10 $\mu$m or less, still more preferably 5.0 $\mu$m or less. When the size of graphene in the plane direction is 0.5 $\mu$m or more, aggregation of graphene is suppressed and the output characteristics and lifespan can be further improved. On the other hand, when the size of graphene in the plane direction is 50 $\mu$m or less, the portions in contact with the active material particles increase, thus the electronic resistance decreases, and the output characteristics and lifespan can be further improved. The size of graphene in the plane direction can be determined by magnifying and observing graphene separated from the mixture layer by the method described later at a magnification of 1,000-fold under a laser microscope, measuring area S for each of 100 graphenes randomly selected, and calculating the arithmetic mean value of the values attained by $2 \times (S/\pi)^{1/2}$.

The specific surface area of graphene reflects the thickness of graphene and the degree of peeling off of graphene. It indicates that graphene is thinner and the degree of peeling off is higher as the specific surface area of graphene is larger. As the specific surface area of graphene is larger, that is, the degree of peeling off is higher, it is easier to form a conductive network of electrode but the dispersibility tends to decrease since graphene is likely to aggregate.

The graphene used in the present invention has a specific surface area of preferably 80 $m^2$/g or more and 250 $m^2$/g or less, more preferably 100 $m^2$/g or more and 200 $m^2$/g or less, still more preferably 130 $m^2$/g or more and 180 $m^2$/g or less as measured by the BET measurement method. The BET measurement method is performed by the method described in JIS Z8830: 2013, the adsorbed gas amount is measured by a carrier gas method, and the adsorption data is analyzed by a one point method.

The graphene used in the present invention preferably has an element ratio (O/C ratio) of oxygen to carbon of 0.08 or more and 0.30 or less as measured by X-ray photoelectron spectroscopy. When there are too few oxygen atoms on the graphene surface, the dispersibility deteriorates. The O/C ratio in graphene is more preferably 0.12 or more and 0.20 or less, still more preferably 0.14 or more and 0.17 or less. When the O/C ratio in graphene is 0.08 or more, the dispersibility can be improved and the output characteristics and lifespan can be further improved. On the other hand, when the O/C ratio in graphene is 0.30 or less, graphene is sufficiently reduced, the conductivity can be further improved by the $\pi$-electron conjugated structure, and the output characteristics can be further improved.

The oxygen atoms on the graphene surface are derived from highly polar functional groups containing oxygen atoms such as a hydroxyl group (-OH), a carboxyl group (-COOH), an ester bond (-C(=O)-O-), an ether bond (-C-O-C-), a carbonyl group (-C(=O)-), and an epoxy group. There is a case in which a surface treatment agent is applied to graphene, and not only the oxygen atoms derived from the functional groups of graphene itself but also the oxygen atoms derived from the functional groups of such a surface treatment agent are included in the "oxygen atoms on the graphene surface". In other words, in graphene to which a surface treatment agent has been applied, the O/C ratio on the surface after being treated with the surface treatment agent is preferably in the above range.

In X-ray photoelectron spectroscopy, the surface of a sample placed in an ultra-high vacuum is irradiated with soft X-rays, and the photoelectrons emitted from the surface are detected by an analyzer. The elemental information on the surface of a substance is acquired by measuring these photoelectrons by wide scan and determining the bond energy value of the bound electrons in the substance. The element ratio can be quantified using the peak area ratio.

The O/C ratio can be controlled by changing the degree of oxidation of graphene oxide that is a raw material or changing the amount of surface treatment agent, for example, when a chemical peeling method is used. The amount of oxygen remaining after reduction is larger as the degree of oxidation of graphene oxide is higher, and the amount of oxygen after reduction is smaller as the degree of oxidation is lower. The amount of oxygen can be increased as the amount of the surface treatment agent having an acidic group attached is increased.

Graphene used in the present invention may have been subjected to a surface treatment. It is preferable that a surface treatment agent exhibiting affinity for a solvent is attached to the graphene surface, and the dispersibility of graphene can be improved. As the surface treatment agent, a compound having a phenyl group and/or an amino group is preferable, and examples thereof include 3-chloroaniline, benzylamine, 2-phenylethylamine, 1-naphthylamine, dopamine hydrochloride, or a neutralized salt thereof. Two or more of these may be used.

[Fibrous carbon]

The electrode for secondary battery of the present invention preferably contains fibrous carbon as a conductive auxiliary. When only graphene is contained as the conductive auxiliary, graphene partially aggregates in the manufacturing process such as solvent removal by drying in some cases. By combining graphene with fibrous carbon, fibrous carbon is crosslinked to graphene by $\pi$-$\pi$ interaction, and thus aggregation between graphenes and between fibrous carbons can be suppressed. The active material particles are also crosslinked to each other by fibrous carbon, the crosslinked portion is further reinforced by the plane-shaped graphene, and it is thus possible to form a firm three-dimensional conductive network over the entire electrode.

Examples of the fibrous carbon include carbon nanotubes such as single-walled carbon nanotubes, double-walled carbon nanotubes, multi-walled carbon nanotubes having three or more walls, and vapor-grown carbon fibers. Two or more of these may be contained. Examples of the vapor-growth carbon fibers include "VGCF" (registered trademark) (manufactured by SHOWA DENKO K.K.).

The fibrous carbon preferably has a shape so as to be flexible and easily dispersed. From this point of view, the outer diameter of the fibrous carbon used in the present invention is preferably 3.0 nm or more and 50 nm or less, more preferably 5.0 nm or more and 20 nm or less. When the outer diameter of the fibrous carbon is 3.0 nm or more, it is easy to loosen the bundle generated by aggregation due to Van der Waals force, the dispersibility can be improved, and the output characteristics and lifespan can be further improved. On the other hand, when the diameter of the fibrous carbon is 50 nm or less, the flexibility is high, and a conductive network between the active material particles and between the conductive auxiliaries can be more easily formed. The stress generated during electrode fabrication can be decreased, and the output characteristics and lifespan can be further improved. The diameter of the fibrous carbon is the fiber diameter (outer diameter) of the fibrous carbon and can be determined by magnifying and observing the fibrous carbons separated from the mixture layer by the method described later at a magnification of 100,000-fold under a field emission scanning microscope (FE-SEM), measuring the outer diameters of 50 fibrous carbons randomly selected, and calculating the arithmetic mean value thereof.

The fiber length of fibrous carbon is preferably 5.0 $\mu$m or more and 50 $\mu$m or less, more preferably 10 $\mu$m or more and 30 $\mu$m or less. When the fiber length is 5.0 $\mu$m or more, the contact resistance hardly affects, the conductive network can be more easily formed, and thus the output characteristics and lifespan can be further improved. On the other hand, when the fiber length is 50 $\mu$m or less, the dispersibility is improved, the conductive network can be more easily formed, and thus the output characteristics and lifespan can be further improved. The fiber length of fibrous carbon can be determined by magnifying and observing the fibrous carbons separated from the mixture layer by the method described later at a magnification of 50,000-fold under a field emission scanning microscope (FE-SEM), measuring the length of 50 fibrous carbons randomly selected, and calculating the arithmetic mean value thereof.

The specific surface area of fibrous carbon is preferably 90 m$^2$/g or more and 350 m$^2$/g or less. When the specific surface area is 90 m$^2$/g or more, the conductive network can be more easily formed, and thus the output characteristics and lifespan can be further improved. On the other hand, when the specific surface area is 350 m$^2$/g or less, the amount of solvent when a slurry is prepared by dispersing fibrous carbon in a solvent can be decreased, the close contact property at the time of electrode formation is improved, and the lifespan can be further improved. The BET measurement method is performed for fibrous carbon by the method described in JIS Z8830: 2013, the adsorbed gas amount is measured by a carrier gas method, and the adsorption data is analyzed by a one point method.

[Active material particles for secondary battery]

The active material for secondary battery used in the present invention is an active material for secondary battery which contains at least lithium and nickel and is capable of electrochemically storing and releasing lithium ions. As an example of such an active material for secondary battery, lithium nickelate (LiNiO$_2$), a ternary system ((Li$_x$Ni$_y$Mn$_z$Co$_{1-y-z}$O$_2$) (0.8 $\leq$ x $\leq$ 1.5, y $\geq$ 0, z $\geq$ 0, and y + z $\leq$ 1) in which nickel is partially substituted with transition elements such as manganese and cobalt, a ternary system (Li$_x$Ni$_y$Co$_z$Al$_{1-y-z}$O$_2$) (0.8 $\leq$ x $\leq$ 1.5, y $\geq$ 0, z $\geq$ 0, and y + z $\leq$ 1) in which nickel is partially substituted with cobalt and aluminum, a solid solution-based active material, or the like can be used, but the active material for secondary battery is only required to contain at least lithium and nickel and is not limited to the above.

The average circularity coefficient of the active material particles for secondary battery used in the present invention is preferably 0.8 or more and 1.0 or less. When the average circularity coefficient is less than 0.8, graphene tends to be unevenly distributed only around the active material, the effect of connecting active materials to each other is diminished, and a firm conductive network cannot be formed. The circularity coefficient is a value attained by multiplying the particle area by $4\pi$ and dividing the product by square of the peripheral length and is expressed by the following equation.

$$\text{Circularity coefficient} = (4\pi \times \text{particle area})/(\text{peripheral length})^2$$

The average circularity coefficient is a value attained by determining the circularity coefficients of 50 individual particles and averaging the circularity coefficients.

Here, the area and peripheral length of particle can be determined by observing the cross section of the electrode under a scanning electron microscope (SEM), and acquiring images in a plurality of visual fields, and analyzing the images acquired using image analysis software. Arbitrary software can be used as the image analysis software, but those having a function of calculating the area, the aspect ratio, the distance between centers of gravity, the circularity coefficient, and the peripheral length such as image analysis type particle size distribution measurement software Mac-View Ver.4.0 developed by MOUNTECH Co., Ltd. that will be described later are preferable. The circularity coefficient can be attained by manually selecting arbitrary active material particles.

The particle size of the active material particles for secondary battery used in the present invention is preferably 1.0 $\mu$m or more and 20 $\mu$m or less, more preferably 5.0 $\mu$m or more and 10 $\mu$m or less. When the particle size is less than 1.0 $\mu$m, the specific surface area of the active material increases, the electron conductivity deteriorates, thus the electron conductivity is poor, further the reactivity with the electrolytic solution also increases, and thus the cycle characteristics tend to deteriorate. When the particle size exceeds 20 $\mu$m, the conduction of lithium ions in the active material particles is poor and thus the rate characteristics tend to deteriorate. In the present specification, the particle size of active material particles indicates the median diameter, and the active material particles are observed under a scanning electron microscope (SEM), the diameters of 100 active material particles are randomly measured, and the median value thereof is taken. Here, the diameter of active material particles is an arithmetic mean value of the longest diameter and the shortest diameter of the individual active material particles observed.

When the median diameter of the active material particles contained in the electrode is directly measured, the surface of the electrode is observed under SEM, the diameters of 100 active material particles appearing on the surface are measured, and the median diameter can be calculated.

The active material particles for secondary battery used in the present invention are preferably granulated bodies, the active material which is a granulated body tends to have an uneven surface shape and is preferable for bringing out the effect of the present invention since it is required to increase the contact faces between the positive electrode active material and the conductive auxiliary. The granulated body means particles obtained by granulating a slurry in which powder is dispersed into a spherical shape by spray drying and the like. As positive electrode active materials suitably used as granulated bodies, there are a ternary system ($LiNi_xMn_yCo_{1-x-y}O_2$), $LiNixCo_yAl_{1-x-y}O_2$, and the like.

[Dispersant]

The electrode for secondary battery of the present invention preferably contains a dispersant. The dispersant in the present invention refers to a material capable of uniformly dispersing a carbon-based material such as graphene or carbon nanotubes in N-methylpyrrolidone (NMP). By using a dispersant, the dispersibility of fibrous carbon and graphene can be further improved and the output characteristics and lifespan can be further improved. The dispersant not only improves the dispersibility of each of fibrous carbon and graphene but also is effective in the formation of a conductive network connecting the active material particles to each other in the final mixture layer since a shearing force is applied to graphene and peeling off is further promoted by preparing a paste under the condition in which high shearing is generated as presented in the electrode formation step to be described later, and the circularity coefficient ratio and the average distance between centers of gravity to be described later can be easily adjusted to the above-mentioned preferable ranges. As the dispersant, those exhibiting excellent oxidation resistance such as polyvinylpyrrolidone and ethyl cellulose are preferable. Two or more of these may be contained.

The content of the dispersant is preferably 5 parts by mass or more and 50 parts by mass or less, more preferably 10 parts by mass or more and 40 parts by mass or less, still more preferably 15 parts by mass or more and 20 parts by mass or less with respect to 100 parts by mass of the sum of fibrous carbon and graphene. When the content of the dispersant is 5 parts by mass or more, the dispersibility of fibrous carbon and graphene can be further improved and the output characteristics and lifespan can be further improved. On the other hand, when the content of the dispersant is 50 parts by weight or less, the increase in resistance of the mixture layer can be suppressed and the output characteristics can be further improved.

[Mixture layer]

The mixture layer contains active material particles for secondary battery and graphene and typically further contains a binder. As the graphene and active material for secondary battery in the mixture layer, the above-mentioned ones can be used. The binder is not particularly limited, but examples thereof include fluorine-based polymers such as polyvinylidene fluoride (PVDF) and polytetrafluoroethylene (PTFE), or rubber such as styrenebutadiene rubber (SBR) and natural rubber, polysaccharides such as carboxymethyl cellulose, polyimide precursors and/or polyimide resins, polyamide-imide resin, polyamide resin, polyacrylic acid, sodium polyacrylate, acrylic resin, and polyacrylonitrile. These may be used as a mixture of two or more thereof. The binding strength is weak when the amount of binder is too small and the resistance increases when the amount of binder is too large, and thus the content of the binder in the mixture layer is preferably 0.10% by mass or more and 3.0% by mass or less, more preferably 0.20% by mass or more and 1.5% by mass with respect to the active material particles for secondary battery, and the content of the binder is still more preferably 0.20% by mass or more and 0.75% by mass or less in order to improve the coating property and energy density.

The content of graphene in the mixture layer is preferably 0.10% by mass or more and 3.0% by mass or less, more preferably 0.2% by mass or more and 1.5% by mass or less with respect to the active material particles for secondary battery, and the content of graphene is still more preferably 0.2% by mass or more and 0.75% by mass or less in order to achieve both coating property and battery characteristics.

It is preferable that the mixture layer contains fibrous carbon, and the content of fibrous carbon in the mixture layer is preferably 0.10 parts by mass or more and 3.0 parts by mass or less, more preferably 0.15 parts by mass or more and 1.50 parts by mass or less with respect to 100 parts by mass of active material particles for secondary battery, and the content of the fibrous carbon is still more preferably 0.20 parts by mass or more and 0.50 parts by mass or less in order to achieve both coating property and battery characteristics.

When the physical properties or contents of graphene, fibrous carbon, and electrode material existing in the mixture layer are analyzed, the electrode material is separated from graphene and fibrous carbon as follows. First, the battery is disassembled in an Ar glove box, and the electrode is washed with dimethyl carbonate and vacuum dried in the side box of the Ar glove box for 1 hour. Next, the mixture layer is peeled off from the current collecting foil using a spatula, the obtained powder is dissolved in a solvent such as N-methylpyrrolidone (NMP) or water, and filtering is performed so as to separate the solution into a filtered product (active material particles for secondary battery, conductive auxiliary, and solvent) and a filtrate (solvent and the like).

The concentrated dry product obtained by vacuum-drying the filtrate is analyzed by Fourier transform infrared spectroscopy (abbreviated as FT-IR) and nuclear magnetic resonance (abbreviated as NMR), and the structures and contents of the binder and dispersant can be thus calculated. However, when the contents in the raw material such as the dispersion are known and the contents do not change even in the mixture layer, the contents in the raw material may be taken as the contents in the mixture layer.

The filtered product obtained is vacuum-dried, the solvent is added to the dry filtered product again in an amount to be 5 times the weight of the filtered product, and the conductive auxiliary attached to the active material particles for secondary battery is separated using an apparatus such as FILMIX (registered trademark) Model 30-30 (PRIMIX Corporation) or a wet jet mill that applies a strong shearing force. The treated product obtained is dried and weighed, then the active material particles for secondary battery are dissolved in an acid such as hydrochloric acid and nitric acid, and filtering is performed so as to separate the solution into a filtered product (conductive auxiliary) and a filtrate (dissolved electrode active material, water). The filtered product is further washed with water and dried, and the weight thereof is measured, and the content and physical properties of graphene in the mixture layer can be thus measured.

It is possible to calculate the thickness of graphene, the size of graphene in the plane direction, the fiber diameter of fibrous carbon, and the fiber length of fibrous carbon by analyzing the conductive auxiliary obtained by the methods described above. The conductive auxiliary obtained is embedded in an epoxy resin, subjected to cross section processing by ion milling, and then observed under SEM, and the area ratio is determined from the areas of 100 conductive auxiliaries. The area ratio is closer to the volume ratio as the number of samples for determination of area is larger, the specific gravity is the same in the case of the same element (for example, in the case of carbon), thus the volume ratio = mass ratio and the area ratio is the mass ratio, and thus the content of each of graphene and fibrous carbon can be determined from the above-mentioned mass and area ratio. However, when the contents in the raw material such as the dispersion are known and the contents do not change even in the mixture layer, the contents in the raw material may be taken as the contents in the mixture layer.

In the electrode for secondary battery of the present invention, the average aspect ratio of conductive material portions in a cross section is 2.0 or more. In the present invention, the conductive material portion in the cross section of the electrode is a portion identified by the following method.

[Method for identifying conductive material portion]

(1) First, the spreading resistance value at the mixture layer portion is acquired by scanning spreading resistance microscopy (SSRM).

SSRM is a method for visualizing the spreading resistance directly under the probe by applying a bias voltage to the sample, scanning the surface using a conductive probe, and measuring the distribution of resistance values two-dimensionally. The applied bias voltage is rapidly attenuated directly under the probe, and thus only the resistance directly under the probe is detected. Such a local resistance is called spreading resistance.

As a pretreatment for measurement by SSRM, the voids of the electrodes are first filled with a resin material. As the resin material, an epoxy resin, a methacrylic acid resin, a polyester resin and the like can be used. Thereafter, the cross section is cut out using an apparatus for processing the electrode cross section. An ion milling apparatus can be used as the apparatus for processing the cross section. The processed surface thus obtained is then scanned by SSRM, whereby it is possible to measure the spreading resistance value of the electrode cross section. The two-dimensional data of the spreading resistance value attained by the measurement and the mapping image of the electrode cross section based on the two-dimensional data can be attained. The two-dimensional data of spreading resistance value can be processed using spreadsheet software such as "Excel" (registered trademark) (Microsoft).

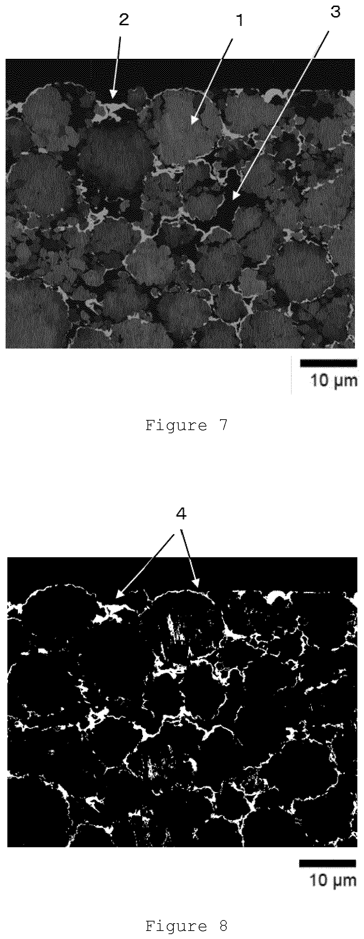

For example, Fig. 7 illustrates a mapping image of the electrode for secondary battery fabricated in Example 2-1 described later. In Fig. 7, reference numeral 1 denotes positive electrode active material particles, reference numeral 2 denotes a conductive auxiliary composed of graphene and fibrous carbon, and reference numeral 3 denotes void and binder portions.

The current collector data is removed from the two-dimensional data of the spreading resistance value to attain only the mixture layer data.

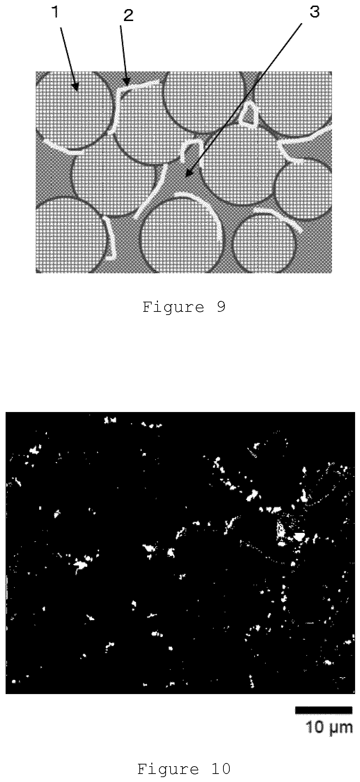

(2) Thereafter, the total data number of the spreading resistance values is taken as N, the spreading resistance values are sorted in ascending order, and the 0.1Nth spreading resistance value (rounded down to the nearest decimal point) is taken as R. Binarization processing of the spreading resistance value is performed using 0.7R as a threshold value and the portion having a resistance value of 0.7R or less in the binarized image attained is taken as the conductive material portion. For example, Fig. 8 illustrates a binarized image of the electrode for secondary battery fabricated in Example 2-1 described later. Reference numeral 1 for the whitish portion denotes the positive electrode active material particles, and reference numeral 2 for the grayish portion denotes the conductive auxiliary. Reference numeral 3 for the blackish portion denotes voids and the binder. Fig. 9 illustrates a model diagram of the mapping image in Fig. 7.

Fig. 8 is an image attained by binarization processing the mapping image illustrated in Fig. 7, and the portion (conductive material portion) having a resistance value of 0.7R or less in Fig. 8 is the white portion denoted by reference numeral 4.

Binarization processing is processing in which a certain threshold value is set in the two-dimensional data and the two-dimensional data is converted into two gradations (1 or 0) by taking the threshold value as the boundary. Specifically, the pixel value indicating the spreading resistance value of 0.7R or less is converted into 1 (white) and the pixel value having a spreading resistance value higher than 0.7R is converted into 0 (black) using spreadsheet software such as Excel. As a result, a binarized image (see Fig. 8) in which the conductive material portion is white and portions other than this are black is attained. When the secondary-processed two-dimensional data is converted into an image, for example, image conversion software ImageJ (free software) can be used.

The average aspect ratio of the conductive material portions can be determined by reading the binarized image attained as described above into image analysis software and analyzing the binarized image. Arbitrary software can be used as the image analysis software, but those having a function of calculating the area, the aspect ratio, the distance between centers of gravity, the circularity coefficient, and the peripheral length such as image analysis type particle size distribution measurement software Mac-View Ver.4.0 developed by MOUNTECH Co., Ltd. are preferable.

The procedure for image analysis using Mac-View Ver.4.0 is presented below as an example. First, the image attained by binarization processing is captured, and the conductive material portion is selected. Selection of particles is performed by automatic selection. The automatic selection is performed by setting the acquisition mode to color difference, the detection allowance to 72 (maximum), the detection accuracy to 0.5 (excellent), the scanning density to 10 (maximum density), and the number of scanning times to 3. After the selection of the conductive material portion by automatic selection is completed, the selection is canceled when the place (black portion) at which the conductive material portion does not exist is selected. After that, the scale is set based on the scale bar and the data is registered to complete the preprocessing, and the image analysis is automatically performed by calling the preprocessed data. When the average aspect ratio is measured, the conductive material portion having an area of 0.5 $\mu m^2$ or less is excluded from the analysis at the time of image analysis.

The average aspect ratio of the conductive material portions in the binarized image described above reflects the ability to connect the active materials to each other, that is, to maintain the conductive network when the electrode is repeatedly used, and the electronic resistance tends to increase when the electrode is repeatedly used if the average aspect ratio is less than 2.0. The average aspect ratio is preferably 2.5 or more, more preferably 2.7 or more. There is a case in which the dispersibility deteriorates and the resistance rather increases when the aspect ratio is too large, and thus the average aspect ratio is preferably 5.0 or less, more preferably 3.0 or less. The aspect ratio in the present specification is a value attained by dividing the major axis by the minor axis when the long side of the quadrangle in a case in which a quadrangle circumscribing the selected conductive material portion is considered and the area thereof is minimized is taken as the major axis and the minor side thereof is taken as the minor axis, and the average value of aspect ratios of all the selected conductive material portions is taken as the average aspect ratio.

The value attained by dividing the average value of the major axes of the conductive material portions in the binarized image described above by the median diameter of the active material particles for secondary battery reflects the ability to connect the active materials to each other, that is, to maintain the network when the electrode is repeatedly used similarly to the average aspect ratio, and the value is preferably 0.25 or more. When the value is less than 0.25, the conductive auxiliary is short with respect to the active material and thus the electronic resistance tends to increase when the electrode is repeatedly used. The value is still more preferably 0.3 or more, still more preferably 0.35 or more.

The circularity coefficient of the conductive material portion in the binarized image described above is preferably 0.20 or less. The circularity coefficient is a value attained by multiplying the particle area by $4\pi$ and dividing the product by square of the peripheral length and is expressed by the following equation.

$$\text{Circularity coefficient} = (4\pi \times \text{particle area})/(\text{peripheral length})^2$$

In the present specification, the average value for all the selected conductive material portions is defined as the circularity coefficient. The circularity coefficient reflects the degree of aggregation between the conductive material portions, and the aggregates are large, the proportion of the aggregated portions of conductive auxiliaries is large, and the electron conductivity between the active materials deteriorates when the circularity coefficient exceeds 0.20. The circularity coefficient is still more preferably 0.18 or less, most preferably 0.17 or less.

The electronic resistance as an electrode increases when the average area of the conductive material portions in the binarized image described above is less than 1.0 $\mu m^2$, the energy density decreases when the average area exceeds 1.6 $\mu m^2$, and thus the area ratio is preferably 1.0% or more and 1.6 $\mu m^2$ or less.

The average distance between centers of gravity of the conductive material portions in the binarized image described above is preferably 1.4 $\mu m$ or more. With regard to the distance between centers of gravity, the distance from the center of gravity of a certain conductive material portion as a reference to the center of gravity of a conductive material portion closest to this conductive material portion is taken as the distance between centers of gravity, and the average value for all the selected conductive material portions is taken as the average distance between centers of gravity. The average distance between centers of gravity indicates the distance between the conductive material portions in the electrode, and the proportion at which the conductive auxiliary having a low aspect ratio is segregated increases and the electronic resistance increases when voids are formed by repeated use when the average distance between centers of gravity is less than 1.4 $\mu m$. The distance between centers of gravity is preferably 1.7 or more, most preferably 1.9 or more.

The circularity coefficient, average area, and average distance between centers of gravity of the conductive material portions can be determined by image analysis using the same image analysis software for binarized images as that for determination of the aspect ratio described above.

[Circularity coefficient ratio]

The ratio (circularity coefficient ratio) of the average circularity coefficient of particles having an area of less than 0.5 $\mu m^2$ to the average circularity coefficient of particles having an area of 0.5 $\mu m^2$ or more is preferably 1.50 or more.

It is focused on the contribution of each of the particles having a large area and the particles having a small area in the conductive material portions to the formation of conductive network. The portion having a small area and a high circularity coefficient has a role of forming a long-distance conductive path from the surface of the electrode to the current collecting foil, and the average circularity coefficient of particles having an area of less than 0.5 $\mu m^2$ is greater as the fibrous carbon is more favorably dispersed in the mixture layer. The portion having a large area and a small circularity coefficient has a role of forming a short-distance conductive path such as active material particles and conductive auxiliaries, and the average circularity coefficient of particles having an area of 0.5 $\mu m^2$ or more is smaller as graphene is more favorably dispersed in the mixture layer. The ratio of these circularity coefficients represents the degree to which graphene and fibrous carbon are both favorably dispersed, and it has been found out that a firm conductive network can be formed by setting the ratio of these circularity coefficients to 1.50 or more. When the circularity coefficient ratio is less than 1.50, one of these is aggregated, the roles of the short-distance and long-distance conductive paths cannot be divided, a firm conductive network cannot be formed, and thus the output characteristics and lifespan decrease.

[Current collector]

The electrode for secondary battery of the present invention is typically fabricated by forming the above-described mixture layer on a current collector. As the current collector, a metal foil or a metal mesh is preferably used, and in particular, aluminum foil is preferably used for the positive electrode and copper foil is preferably used for the negative electrode.

[Method for manufacturing electrode for secondary battery]

The electrode for secondary battery of the present invention can be manufactured by, for example, preparing a graphene dispersion and a fibrous carbon dispersion to be described later and then performing the electrode formation step to be described later.

[Graphene dispersion]

The graphene dispersion used in the present invention can be prepared by a production method including:

a surface treatment step of mixing graphene oxide and a surface treatment agent having an acidic group in a solvent;
a reduction step of reducing graphene oxide dispersed in a dispersion medium containing water;
an organic solvent mixing step of mixing the intermediate dispersion undergone the reduction step and an organic solvent; and
a vigorous stirring step of subjecting the intermediate dispersion containing an organic solvent to a stirring treatment at a peripheral speed of 6 m/s or more and 70 m/s or less of the rotary blade of a mixer as an example. The production method may further include a washing step and a refinement step to be described later. By using the graphene dispersion obtained by such a production method, the average circularity coefficient, circularity coefficient ratio, average aspect ratio, and average distance between centers of gravity of the particles having an area of 0.5 $\mu m^2$ or more described above can be easily adjusted to the above-described preferable ranges.

[Graphene oxide]

The method for producing graphene oxide is not particularly limited, and a known method such as the Hummer's method can be used. Commercially available graphene oxide may be purchased.
Graphene oxide exhibits high dispersibility but itself is insulating and cannot be used as a conductive auxiliary or the like. There is a case in which the conductivity of graphene powder obtained by reduction is poor when the degree of oxidation of graphene oxide is too high, and thus the proportion of carbon atoms to oxygen atoms in graphene oxide is preferably 0.5 or more as measured by X-ray photoelectron spectroscopy. When graphene oxide is subjected to measurement by X-ray photoelectron spectroscopy, the measurement is performed in a state in which the solvent is sufficiently dried.
If graphite is not oxidized to the inside, it is difficult to obtain flaky graphene powder when being reduced. Hence, it is desirable that a peak peculiar to graphite is not detected when graphene oxide is dried and subjected to X-ray diffraction measurement.
The degree of oxidation of graphene oxide can be adjusted by changing the amount of oxidizing agent used in the oxidation reaction of graphite. Specifically, the degree of oxidation is higher as the amounts of sodium nitrate and potassium permanganate with respect to graphite that are all used in the oxidation reaction are larger, and the degree of oxidation is lower as the amounts thereof are smaller. The weight ratio of sodium nitrate to graphite is not particularly limited but is preferably 0.200 or more and 0.800 or less, more preferably 0.250 or more and 0.500 or less, still more preferably 0.275 or more and 0.425 or less. The ratio of potassium permanganate to graphite is not particularly limited but is preferably 1.00 or more, more preferably 1.40 or more, still more preferably 1.65 or more. The ratio of potassium permanganate to graphite is preferably 4.00 or less, more preferably 3.00 or less, still more preferably 2.55 or less.

[Surface treatment step]

In the surface treatment step, graphene oxide is mixed with a surface treatment agent having an acidic group. The surface treatment agent exerts an effect of enhancing the dispersibility of graphene as at least a part thereof exists by being attached to the graphene surface, and the surface treatment agent is particularly effective for favorable dispersion of graphene in an organic solvent and is important for the formation of a conductive network connecting active materials to each other in the final mixture layer.

Here, the acidic group is a hydroxyl group, a phenolic hydroxyl group, a nitro group, a carboxyl group, or a carbonyl group. The surface treatment agent is not particularly limited as long as it is a compound having an acidic group, namely a hydroxyl group, a phenolic hydroxyl group, a nitro group, a carboxyl group, or a carbonyl group, but a low molecular weight compound is preferable.

Among others, a compound having a catechol group is preferable as a surface treatment agent since the compound exhibits adhesive property to graphene and dispersibility in a solvent. Examples of the compound having a catechol group include catechol, dopamine hydrochloride, 3-(3,4-dihydroxyphenyl)-L-alanine, 4-(1-hydroxy-2-aminoethyl)catechol, 3,4-dihydroxybenzoic acid, 3,4-dihydroxyphenylacetic acid, caffeic acid, 4-methylcatechol, and 4-tert-butylpyrocatechol.

The surface treatment agent may have a basic group in addition to the acidic group, and the dispersibility is improved by having an amino group in particular. Hence, a compound having both a catechol group and an amino group is particularly preferable as a surface treatment agent. Dopamine hydrochloride is exemplified as such a compound.

[Reduction step]

In the reduction step, graphene oxide dispersed in a dispersion medium containing water is reduced. The solvent used in the reduction step is preferably a polar solvent, and preferable examples thereof include water, ethanol, methanol, 1-propanol, 2-propanol, N-methylpyrrolidone, dimethylformamide, dimethylacetamide, dimethyl sulfoxide, γ-butyrolactone, or a mixture of these. When the above-described surface treatment agent mixing step is performed in a solvent, it is preferable that the process proceeds to the reduction step as it is after the completion of this step or graphene oxide dispersion is diluted with the same solvent as that used in the surface treatment agent mixing step and graphene oxide is reduced.

The method for reducing graphene oxide is not particularly limited, but chemical reduction is preferable. In the case of chemical reduction, examples of the reducing agent include an organic reducing agent and an inorganic reducing agent, but an inorganic reducing agent is more preferable because of ease of washing after reduction.

Examples of the inorganic reducing agent include sodium dithionite, potassium dithionite, phosphorous acid, sodium borohydride, and hydrazine, and sodium dithionite and potassium dithionite among these are suitably used since reduction can be performed while relatively retaining the acidic group and graphene exhibiting high dispersibility in a solvent can be produced.

[Washing step]

By preferably performing the washing step of diluting the dispersion with water and filtering the diluted dispersion after completion of the reduction step, the purity of graphene is improved, and a gel-like dispersion in which graphene is dispersed in water is obtained. In the present specification, the intermediates in which graphene or graphene oxide is in a state of being dispersed in any dispersion medium in the process of production including gel-like ones other than the finally completed graphene dispersion are all referred to as "intermediate dispersions" for convenience.

[Refinement step]

It is preferable to perform a refinement step of refining graphene oxide contained in the intermediate dispersion before or after being subjected to the reduction step or being subjected to the reduction step or graphene obtained after reduction before, during, or after the reduction step. In order to obtain the graphene dispersion used in the present invention, it is preferable to perform the reduction step in a state in which graphene oxide is refined, and it is thus preferable to perform the refinement step before or during the reduction step.

By adding the refinement step, the size of graphene oxide or graphene in the plane direction can be adjusted to a proper size. The preferable size is as described above. The method of refinement is not particularly limited, but refinement can be achieved by mixing a plurality of pulverization media such as beads and balls with the dispersion and causing the pulverization media to collide with each other. Examples thereof include a method in which the intermediate dispersion to which pressure is applied is caused to collide with simple ceramic balls or a method in which the intermediate dispersions to which pressure is applied are caused to collide with each other to disperse graphene oxide or graphene using a liquid-liquid shear type wet jet mill. The method in which ultrasonic waves are applied to the intermediate dispersion is a medialess dispersion method and is also a preferable method.

In the refinement step, graphene oxide or graphene tends to be further refined as the treatment pressure and output in the medialess dispersion method are higher and graphene oxide or graphene tends to be further refined as the treatment time is longer. The preferable size of graphene in the plane direction is as presented above. It is possible to adjust the size of graphene after reduction depending on the type of refinement treatment, treatment conditions, and treatment time in the refinement step.

[Organic solvent mixing step]

In the organic solvent mixing step, the intermediate dispersion is mixed with an organic solvent in order to replace the water in the intermediate dispersion after being subjected to the reduction step with the organic solvent. In the organic solvent mixing step, the intermediate dispersion obtained through the surface treatment step and the reduction step or, If necessary, the intermediate dispersion which has been further subjected to the washing step and/or the refinement step is directly mixed with an organic solvent. In other words, the intermediate dispersion is always in the state of a dispersion from the end of the reduction step to the mixing with the organic solvent in the organic solvent mixing step, and operation such as freeze-drying for removing the dispersion medium from the intermediate dispersion and recovering graphene as a powder is not performed.

[Vigorous stirring step]

After the organic solvent mixing step, a step (vigorous stirring step) of stirring the intermediate dispersion containing the organic solvent at a peripheral speed of 6 m/s or more and 70 m/s of the rotary blade of the mixer is performed. By peeling off graphene in the vigorous stirring step, the stack between graphenes can be eliminated, and peeling off of graphene is particularly effective for favorable dispersion of graphene in an organic solvent and is important for the formation of a conductive network connecting active materials to each other in the final mixture layer. In the present specification, a rotary blade mixer that can impart such a vigorous stirring force to the intermediate dispersion is referred to as a "vigorous stirring mixer".

In the vigorous stirring step, the peripheral speed of the rotary blade of the mixer is preferably 10 m/s or more, more preferably 30 m/s or more. The peripheral speed of the rotary blade of the mixer is defined by peripheral length × rotational speed. When the peripheral speed is too low, peeling off of graphene is less likely to occur and the degree of peeling off of graphene is low. On the other hand, when the peripheral speed is too high, the degree of peeling off of graphene is too high and the dispersibility decreases.

The shearing velocity is more preferably 5000 to 50000 per second. When the shearing velocity is too low, peeling off of graphene is less likely to occur and the degree of peeling off of graphene is low. On the other hand, when the shearing velocity is too high, the degree of peeling off of graphene is too high and the dispersibility decreases. The shearing velocity is a value attained by dividing the peripheral speed at the maximum diameter of the rotary blade of the mixer by the distance of the tip of the rotary blade of the mixer (the edge that determines the maximum diameter) to the wall surface.

The treatment time in the vigorous stirring step is preferably 15 seconds to 300 seconds, more preferably 20 seconds to 120 seconds, still more preferably 30 seconds to 80 seconds.

As the vigorous stirring mixer used in the vigorous stirring step, an apparatus capable of attaining a high peripheral speed such as a planetary mixer with disper or robomix is preferable, and a mixer having a short shape such as a thin film swivel type or a rotor/stator type in which the distance between the rotating blade and the wall surface is 10 mm or less and a medialess type mixer having a high shearing force are still more preferable. Examples of the mixer having such a high shearing force include FILMIX (registered trademark) Model 30-30 (manufactured by PRIMIX Corporation), CLEARMIX (registered trademark) CLM-0.8S (manufactured by M Technique Co., Ltd.), and Super Shear Mixer SDRT0.35-0.75 (manufactured by Satake Chemical Equipment Mfg., Ltd.).

The solid content in the graphene dispersion is preferably 3.0% by mass or more and 20% by mass or less. The solid content is more preferably 10% by mass or less, still more preferably 5.0% by mass or less. The solid content is more preferably 3.0% by mass or more, still more preferably 4.0% by mass or more. When the solid content is 3.0% by mass or more, shearing force is likely to be applied to graphene when being vigorously stirred with the positive electrode active material and graphene can be easily peeled off. On the other hand, when the solid content is 20% by mass or less, the stacking of graphene in the dispersion is suppressed, the viscosity appropriately decreases, vigorous stirring is easily performed, and thus a more favorable dispersion state can be attained.

The solid content in the graphene dispersion can be calculated by measuring the mass of the residue obtained after the solvent has been dried from the graphene dispersion and dividing the measured value by the mass of the graphene dispersion itself. Specifically, the mass of graphene remaining when about 1 g of graphene dispersion is attached onto a glass substrate having a known mass and then the solvent is volatilized by heating on a hot plate of which the temperature has been adjusted to 120°C for 1.5 hours is measured.

[Fibrous carbon dispersion]

Examples of the method for obtaining the fibrous carbon dispersion include a method in which the fibrous carbon powder is directly mixed with an organic solvent. At this time, it is preferable to use a dispersant. Examples of the dispersant include those exemplified as the dispersant contained in the mixture layer. By using a dispersant, the fibrous carbon and the dispersant enter graphene once peeled off and the dispersed state is easily maintained as well as the dispersibility of the fibrous carbon is enhanced. Thereafter, the stirring treatment is performed at a peripheral speed of 6 m/s or more and 70 m/s of the rotary blade of the mixer using a "vigorous stirring mixer". By using the fibrous carbon dispersion obtained by such a production method, the average circularity coefficient, circularity coefficient ratio, and average distance between centers of gravity of the particles having an area of less than 0.5 $\mu m^2$ described above can be easily adjusted to the above-described preferable ranges.

The solid content in the fibrous carbon dispersion is preferably 2.0% by mass or more and 20% by mass or less. The solid content is preferably 10% by mass or less, more preferably 5.0% by mass or less. The solid content is preferably 3.0% by mass or more, more preferably 4.0% by mass or more. When the solid content is 2.0% by mass or more, shearing force is likely to be applied to the fibrous carbon at the time of vigorous stirring, and the aggregated fibrous carbon can be easily loosened. On the other hand, when the solid content is 20% by mass or less, the stacking of fibrous carbon in the dispersion is suppressed, the viscosity appropriately decreases, vigorous stirring is easily performed, and thus a more favorable dispersion state can be attained.

[Electrode formation step]

As a first aspect, the electrode for secondary battery can be manufactured as follows: the active material particles and the above-described graphene dispersion are subjected to a vigorous stirring treatment at a peripheral speed of 6 m/s or more and 70 m/s or less of the rotary blade of the mixer, then a binder solution at 5% by mass or more and 20% by mass or less is added to the resultant dispersion, then the above-described fibrous carbon dispersion is subjected to a vigorous stirring treatment at a peripheral speed of 6 m/s or more and 70 m/s or less of the rotary blade of the mixer, an appropriate amount of solvent is added to the resultant dispersion if necessary to prepare an electrode paste so that the solid concentration is 65% by mass to 75% by mass, the electrode paste is applied to a current collecting foil and dried, and then pressing is performed using a pressing machine.

As a second aspect, the electrode for secondary battery can be manufactured as follows: the active material particles and the above-described graphene dispersion are subjected to a vigorous stirring treatment at a peripheral speed of 6 m/s or more and 70 m/s or less of the rotary blade of the mixer, then the above-described fibrous carbon dispersion is subjected to a vigorous stirring treatment at a peripheral speed of 6 m/s or more and 70 m/s or less of the rotary blade of the mixer, then a binder solution at 5.0% by mass or more and 20% by mass or less and, if necessary, an appropriate amount of solvent are added to the resultant dispersion to prepare an electrode paste so that the solid concentration is 65% by mass to 75% by mass, the electrode paste is applied to a current collecting foil and dried, and then pressing is performed using a pressing machine.

Here, when the graphene dispersion and the carbon nanotube dispersion are dried once before the electrode paste is prepared, the aggregation is strong, and it is thus important to form a conductive network in the final mixture layer without drying these dispersions. It is effective to subject the graphene dispersion and the active material particles to a vigorous stirring treatment at a high concentration in the electrode formation step for the formation of a conductive network connecting active material particles to each other in the final mixture layer since shearing force is applied to graphene and peeling off of graphene is further promoted. By such a method, the circularity coefficient ratio and average distance between centers of gravity described above can be easily adjusted to the above-described preferable ranges.

As the binder, those described above can be used. The binder is preferably dissolved in a solvent in advance and then used. Examples of the solvent used include NMP, γ-butyrolactone, water, and dimethylacetamide, and it is most preferable to use NMP that is a solvent contained in the graphene dispersion used in the present invention. The concentration of the binder solution is preferably 3% by mass or more and 20% by mass or less, still more preferably 5% by mass or more and 10% by mass or less. It is difficult to apply shearing force to graphene at the time of vigorous stirring and to peel off graphene when the concentration is too low, and the viscosity is too high, vigorous stirring cannot be performed, and a favorably dispersed state is hardly maintained when the concentration is too high.

<Secondary battery>

It is preferable that the secondary battery of the present invention includes the above-described electrode for secondary battery and further includes a separator, an electrolyte, and an exterior member.

[Negative electrode]

The negative electrode can include a negative electrode current collector and a negative electrode active material-containing layer. The negative electrode active material-containing layer can be formed on one side or both sides of the negative electrode current collector. The negative electrode active material-containing layer contains a negative electrode active material and may further contain a conductive agent and a binder.
Examples of the negative electrode active material include lithium metal and lithium alloys; carbon-based active materials such as coke, artificial graphite, natural graphite, burned organic polymer compounds, and carbon fibers; alloy-based active materials of Si, $SiO_x$, Sn, $SnO_2$ or the like with lithium; titanium oxide, lithium titanium oxide, niobium titanium oxide, and sodium niobium titanium oxide. Two or more of these may be used. The surface of the negative electrode active material particles may be subjected to carbon coating or an electron conductive inorganic material coating.
The conductive agent is blended in order to enhance the current collecting performance and suppress the contact resistance between the negative electrode active material and the current collector. Examples of the conductive agent include carbon materials such as carbon nanotubes, acetylene black, carbon black, and graphite. Two or more of these may be used. Graphene and fibrous carbon that exhibit enhanced dispersibility and have been described in the electrode may be used.
The binder is blended in order to fill the gaps between the dispersed negative electrode active materials and bind the negative electrode active material to the negative electrode current collector. Examples of the binder include polytetrafluoroethylene (PTFE), polyvinylidene fluoride (PVDF), fluororubber, styrenebutadiene rubber, polyacrylic acid compounds, and imide compounds. Two or more of these may be used.
The active material, conductive agent, and binder in the negative electrode active material-containing layer are preferably blended at proportions of 68% by mass or more and 96% by mass or less, 2% by mass or more and 30% by mass or less, and 2% by mass or more and 30% by mass or less, respectively.
The negative electrode current collector is preferably formed of copper, nickel, stainless steel, or aluminum or an aluminum alloy containing one or more elements selected from Mg, Ti, Zn, Mn, Fe, Cu, or Si. The thickness of the negative electrode current collector is preferably in a range of 5 μm or more and 20 μm or less.
The negative electrode can be fabricated, for example, by the following method. First, the negative electrode active material, the conductive agent, and the binder are suspended in a solvent to prepare a slurry. This slurry is applied to one side or both sides of the negative electrode current collector. Subsequently, the applied slurry is dried to obtain a laminate of the negative electrode active material-containing layer and the negative electrode current collector. Thereafter, this laminate is pressed. The negative electrode is fabricated in this manner. Alternatively, the negative electrode may be fabricated by the following method. First, the negative electrode active material, the conductive agent, and the binder are mixed together to obtain a mixture. Subsequently, this mixture is molded into pellets. Subsequently, these pellets are disposed on the negative electrode current collector, whereby the negative electrode can be obtained.

[Positive electrode]

It is preferable to use the above-described electrode as the positive electrode.

[Electrolyte]

As the electrolyte, a liquid non-aqueous electrolyte, a gel-like non-aqueous electrolyte, and a room temperature molten salt (ionic melt) containing lithium ions, a polymer solid electrolyte, an inorganic solid electrolyte, and the like can be used. The liquid non-aqueous electrolyte is prepared by dissolving an electrolyte such as LiPF6 in an organic solvent. The concentration of electrolyte is preferably 0.5 mol/L or more and 5.0 mol/L or less.
The gel-like non-aqueous electrolyte is prepared by compounding a liquid non-aqueous electrolyte and a polymer material. Examples of the polymer material include polyvinylidene fluoride (PVDF), polyacrylonitrile (PAN), and polyethylene oxide (PEO). Two or more of these may be used.
A room temperature molten salt (ionic melt) refers to a compound that can exist as a liquid at room temperature (15°C or more and 25°C or less) among organic salts composed of a combination of an organic cation and an anion. Generally, the melting point of a room temperature molten salt used in a non-aqueous electrolyte battery is 25°C or less.

The organic cation generally has a quaternary ammonium skeleton.

The polymer solid electrolyte is prepared by dissolving the electrolyte in a polymer material and solidifying the solution.

The inorganic solid electrolyte is a solid substance exhibiting Li ion conductivity.

[Separator]

As the separator, it is preferable to use a porous film formed of polyethylene or polypropylene. This is because these porous films can melt at a certain temperature to cut off the electric current.

[Exterior member]

As the exterior member, for example, a container formed of a laminated film and a metal container can be used.

The shape of the exterior member is not particularly limited. The shape of the exterior member may be, for example, a flat type (thin type), a square type, a cylindrical type, a coin type, or a button type.

EXAMPLES

[Measurement Example 1: Method for measuring shape of conductive material portion]

The voids of the electrodes obtained in Examples and Comparative Examples were filled with an epoxy resin. After that, the electrode cross section was cut out using an ion milling apparatus (IM4000 manufactured by Hitachi High-Tech Corporation). The spreading resistance value in the electrode cross section was measured by scanning spreading resistance microscopy. After that, the total data number of spreading resistance values N (1024 columns x 918 rows in the case of Example 1) attained by removing the current collecting foil data from the acquired spreading resistance value data of 1024 columns $\times$ 1024 rows were sorted in ascending order using Excel, and then the 0.1Nth spreading resistance value (rounded down to the nearest decimal point) was taken as R. Binarization processing was performed on all the two-dimensional data using 0.7R as a threshold value. A pixel value indicating a resistance value of 0.7R or less was set to 1 (white), a pixel value having a resistance value higher than 0.7R was set to 0 (black), and a binarized image (white portion was conductive auxiliary portion) was attained using ImageJ (free software).

Image analysis was performed on the conductive material portion attained. The analysis was performed using image analysis type particle size distribution measurement software Mac-View Ver.4.0 developed by MOUNTECH Co., Ltd. under the following automatic selection conditions.

The automatic selection was performed by setting the acquisition mode to color difference, the detection allowance to 72 (maximum), the detection accuracy to 0.5 (excellent), the scanning density to 10 (maximum density), and the number of scanning times to 3. After that, the scale was set based on the scale bar of the mapped image, and the image analysis using software was performed to attain the average aspect ratio, the average circularity coefficient for an area of less than 0.5 $\mu m^2$, the average circularity coefficient for an area of 0.5 $\mu m^2$ or more, the average distance between centers of gravity, and the average major axis.

[Measurement Example 2: Battery performance evaluation]

With regard to the rate characteristics and cycle characteristics, a working electrode was fabricated by punching the electrode plate fabricated in each of Examples and Comparative Examples using a punch of $\varphi$16.1 mm. As a counter electrode, 98 parts by weight of graphite (manufactured by Ito Graphite Co., Ltd., Model Number SG-BH8, particle size 8 $\mu$m), 1 part by weight of 1% aqueous solution of sodium carboxymethyl cellulose (manufactured by Daicel Miraizu Ltd., Model Number #2200) in terms of solid content, 1 part by weight of 1% aqueous dispersion of SBR (manufactured by JSR Corporation, Model Number TRD2001) in terms of solid content, and ion-exchanged water were added so that the solid concentration in the entire electrode paste was 50%, and mixing was performed at a rotational speed of 30 RPM for 30 minutes using a planetary mixer to obtain an electrode paste. This electrode paste was applied to a copper foil (thickness: 10 $\mu$m) so as to be 7.7 mg/cm$^2$ using a doctor blade. Pressing was performed at a linear pressure of 8 kN/cm using a roll pressing machine (manufactured by THANK METAL CO., LTD.), and vacuum drying was performed at 80°C for 5 hours using a glass tube oven to fabricate a negative electrode, and this negative electrode was cut to have a diameter of 16.8 mm and used. Celgard #2400 (manufactured by Celgard, LLC.) cut to have a diameter of 16.8 mm was used as a separator, ethylene carbonate : diethyl carbonate = 7 : 3 (% by volume) solvent containing 1 M of LiPF$_6$ was used as the electrolytic solution to fabricate a 2032 type coin battery, and this 2032 type coin battery was set in a charge and discharge testing machine (TOSCAT-3100 manufactured by TOYO SYSTEM CO., LTD.) and subjected to electrochemical evaluation. At an upper limit voltage of 4.2 V and a lower limit voltage of 2.5 V, constant current charge was performed at 1 C up to the charge voltage and then constant voltage charge was performed at 4.2 V. The end current in the constant voltage charge was 0.01 C. The charge rate was fixed at 1 C throughout the test, the rate test was performed three times at each discharge rate of 0.1 C, 1 C, and 5 C in this order, and then the rate test was further performed 291 times at 1 C for a total of 300 cycle tests. The discharge capacity in each of the third time at a rate of 1 C, the third time at a rate of 5 C, and then the 291th time at a rate of 1 C (300th in total) was measured.

(Synthesis Example 1: Method for preparing graphene oxide gel)

Natural graphite powder of 1500 mesh (Shanghai Yifan Graphite Co., Ltd.) was used as a raw material, 220 ml of 98% concentrated sulfuric acid, 5 g of sodium nitrate, and 30 g of potassium permanganate were added to 10 g of natural graphite powder in an ice bath, mechanical stirring was performed for 1 hour, and the temperature of the liquid mixture was maintained at 20°C or less. This liquid mixture was taken out from the ice bath and stirred and reacted in a water bath at 35°C for 4 hours, and then the suspension obtained by adding 500 ml of ion-exchanged water to the liquid mixture was reacted at 90°C for another 15 minutes. Finally, 600 ml of ion-exchanged water and 50 ml of hydrogen peroxide were added to the resultant suspension, and the reaction was performed for 5 minutes to obtain a graphene oxide dispersion. This was filtered while it was hot, the metal ions were washed with a dilute hydrochloric acid solution, the acid was washed with ion-exchanged water, and the washing was repeated until the pH reached 7 to prepare a graphene oxide gel. The element ratio of oxygen atom to carbon atom in the prepared graphene oxide gel was 0.53 as measured by X-ray photoelectron spectroscopy.

(Synthesis Example 2: Method for preparing graphene NMP1 dispersion)

The graphene oxide gel prepared in Synthesis Example 1 was diluted with ion-exchanged water to a concentration of 30 mg/ml and treated using an ultrasonic cleaning machine for 30 minutes to obtain a uniform graphene oxide dispersion.

A mixture was obtained by mixing 20 ml of the graphene oxide dispersion with 0.3 g of dopamine hydrochloride as a surface treatment agent and treated using HOMO DISPER Model 2.5 (PRIMIX Corporation) at a rotational speed of 3000 RPM for 60 minutes. Ultrasonic waves were applied to the graphene oxide dispersion after being treated at an output of 300 W for 30 minutes using an ultrasonic apparatus UP400S (manufactured by Hielscher Ultrasonics GmbH). After the treatment, the graphene oxide dispersion was diluted with ion-exchanged water to 5 mg/ml, 0.3 g of sodium dithionite was added to 20 ml of the diluted dispersion, and the reduction reaction was performed at 40°C for 1 hour. Thereafter, the washing step of filtering the resultant dispersion through a vacuum suction filter, further diluting the filtered product with water to 0.5% by mass, and performing suction filtration was repeated five times for washing. After washing, the filtered product was diluted to 0.5% by mass with NMP and treated at a peripheral speed of 40 m/s (shearing velocity: 40000 per second) for 60 seconds using FILMIX (registered trademark) Model 30-30 (PRIMIX Corporation) (vigorous stirring step), and suction filtration was performed. After filtration, a step of diluting the filtered product to 0.5% by mass with NMP, treating the dispersion at a rotational speed of 3000 RPM for 30 minutes using HOMO DISPER Model 2.5 (PRIMIX Corporation), and performing suction filtration was repeated four times to obtain a graphene NMP dispersion. Since the concentration of the obtained dispersion was 4.5% by mass, NMP was added to adjust the concentration of the dispersion to 4.0% by mass, and the dispersion was treated using a planetary mixer at a rotational speed of 20 RPM for 30 minutes to obtain a graphene NMP dispersion (4.0% by mass).

(Synthesis Example 3: Method for preparing graphene NMP dispersion 2)

The graphene oxide gel prepared in Synthesis Example 1 was diluted with ion-exchanged water to 5 mg/ml and treated using an ultrasonic cleaning machine for 30 minutes, then 0.3 g of sodium dithionite was added to 20 ml of the diluted dispersion, and the reduction reaction was performed at 40°C for 1 hour. After that, the resultant dispersion was filtered through a vacuum suction filter, and the filtered product was further diluted with water to 0.7% by mass and freeze-dried to obtain graphene powder. NMP was added to the graphene powder, the concentration of the dispersion was adjusted to 2.0% by mass, and the treatment was performed at a rotational speed of 20 RPM for 30 minutes using a planetary mixer to obtain a graphene NMP dispersion (2.0% by mass).

(Synthesis Example 4: Method for preparing graphene NMP dispersion 3)

Graphene NMP dispersion 2 (4.0% by mass) was obtained by the same method as in Synthesis Example 2 except that the surface treatment step was not performed in Synthesis Example 2.

(Synthesis Example 5: Method for preparing graphene NMP dispersion 4)

A Graphene NMP dispersion (4.0% by mass) was obtained by the same method as in Synthesis Example 2 except that an ultrasonicator was not used in Synthesis Example 2.

(Synthesis Example 6: Method for preparing graphene NMP dispersion 5)

A Graphene NMP dispersion (3.0% by mass) was obtained by the same method as in Synthesis Example 2 except that the concentration of the graphene NMP dispersion was set to 3.0% by weight in Synthesis Example 2.

(Synthesis Example 7: Method for preparing fibrous carbon dispersion 1)

To 4.0 parts by mass of FLoTube7010 (carbon nanotube (CNT) manufactured by Jiangsu Cnano Technology Co., Ltd., average diameter: 7 to 11 nm, average length: 10 to 20 $\mu$m), 1.0 part by mass of polyvinylpyrrolidone was added, 95.0 parts by mass of NMP (manufactured by Mitsubishi Chemical Corporation) was further added thereto, and the mixture was treated at a peripheral speed of 40 m/s (shearing velocity: 40,000 per second) for 60 seconds using "FILMIX" (registered trademark) Model 30-30 (PRIMIX Corporation) to obtain fibrous carbon dispersion 1 (4.0% by mass).

(Synthesis Example 8: Method for preparing fibrous carbon dispersion 2)

To 4.0 parts by mass of VGCF (registered trademark) - H (Vapor-Grown Carbon Fiber manufactured by SHOWA DENKO K.K., average diameter: 150 nm, average length: 6 $\mu$m), 1.0 part by mass of polyvinylpyrrolidone was added, 95.0 parts by mass of NMP (manufactured by Mitsubishi Chemical Corporation) was further added thereto, and the mixture was treated at a peripheral speed of 40 m/s (shearing velocity: 40,000 per second) for 60 seconds using "FILMIX" (registered trademark) Model 30-30 (PRIMIX Corporation) to obtain fibrous carbon dispersion 2 (4.0% by mass).

(Synthesis Example 9: Method for preparing fibrous carbon dispersion 3)

To 4.0 parts by mass of VGCF (registered trademark) - H (Vapor-Grown Carbon Fiber manufactured by SHOWA DENKO K.K., average diameter: 150 nm, average length: 6 $\mu$m), 96.0 parts by mass of NMP (manufactured by Mitsubishi Chemical Corporation) was added, and the mixture was treated at a peripheral speed of 40 m/s (shearing velocity: 40,000 per second) for 60 seconds using "FILMIX" (registered trademark) Model 30-30 (PRIMIX Corporation) to obtain fibrous carbon dispersion 3 (4.0% by mass).

[Example 1-1]

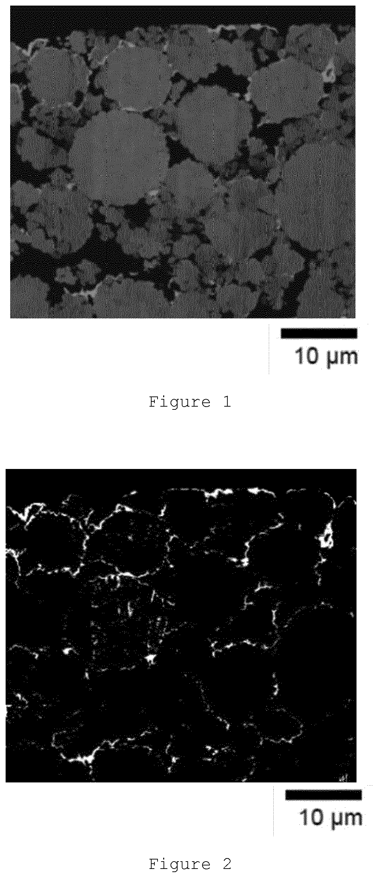

The graphene dispersion (4.0% by mass) prepared in Synthesis Example 2 as a conductive auxiliary was added at 0.5 parts by weight as a graphene solid content, polyvinylidene fluoride #7200 (manufactured by KUREHA CORPORATION) as a binder was added at 1.0 part by weight as a binder solid content, and the mixture was treated at a peripheral speed of 40 m/s (shearing velocity: 40,000 per second) for 60 seconds using "FILMIX" (registered trademark) Model 30-30 (PRIMIX Corporation). Here, the binder used was dissolved in NMP to prepare an 8.0% by mass solution in advance. Next, 100 parts by weight of $LiNi_{0.5}Co_{0.2}Mn_{0.3}O_2$ (NCM) (manufactured by Yumicore, granulated body having a median diameter of 10 $\mu$m) as active material particles was added to the mixture, and mixing was performed at a rotational speed of 30 RPM for 30 minutes using a planetary mixer. NMP as a solvent was additionally added to the mixture so as to be in a total amount of 44 parts by weight, and then mixing was performed at a rotational speed of 15 RPM for 30 minutes using a planetary mixer to obtain an electrode paste. This electrode paste was applied to an aluminum foil (thickness: 18 $\mu$m) using a doctor blade so that the basis weight was 15 mg/cm$^2$ and dried at 80°C for 30 minutes, then pressing was performed using a roll pressing machine, and vacuum drying was performed at 120°C for 5 hours using a vacuum dryer to obtain an electrode plate. The thickness of the electrode mixture layer (excluding aluminum foil) was set to 40 $\mu$m. The spreading resistance value distribution image (mapping image) before binarization and binarized image of the electrode plate attained by the method of Measurement Example 1 are illustrated in Figs. 1 and 2, respectively.

[Example 1-2]

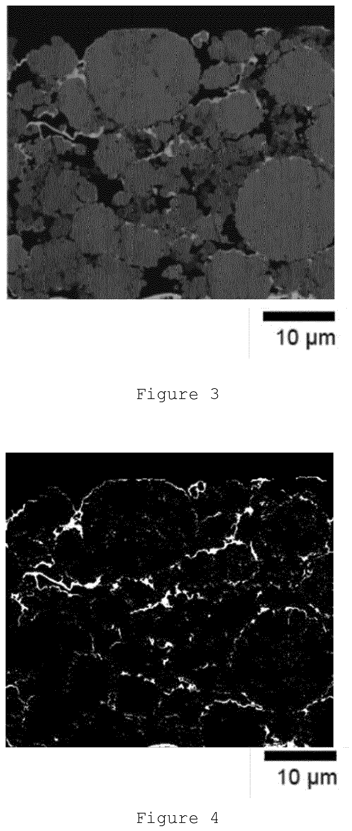

An electrode plate was fabricated under the same conditions as in Example 1 except that the graphene dispersion (4.0% by mass) prepared in Synthesis Example 2 as a conductive auxiliary was used at 0.25 parts by weight as a graphene solid content, the graphene dispersion (4.0% by mass) prepared in Synthesis Example 5 as a conductive auxiliary was used at 0.25 parts by weight as a graphene solid content, polyvinylidene fluoride #7200 (manufactured by KUREHA CORPORATION) as a binder was used at 1.0 part by weight as a binder solid content, and NMP as a solvent was additionally added so as to be in a total amount of 43 parts by weight. The spreading resistance value distribution image (mapping image) before binarization and binarized image of the electrode plate attained by the method of Measurement Example 1 are illustrated in Figs. 3 and 4, respectively.

[Example 1-3]

An electrode plate was fabricated under the same conditions as in Example 1-1 except that the graphene dispersion (4.0% by mass) prepared in Synthesis Example 2 as a conductive auxiliary was used at 1.0 part by weight as a graphene solid content, polyvinylidene fluoride #7200 (manufactured by KUREHA CORPORATION) as a binder was used at 1.0 part by weight as a binder solid content, and NMP as a solvent was additionally added so as to be in a total amount of 50 parts by weight.

[Example 1-4]

An electrode plate was fabricated under the same conditions as in Example 1-1 except that the graphene dispersion (4.0% by mass) prepared in Synthesis Example 2 as a conductive auxiliary was used at 0.2 parts by weight as a graphene solid content, polyvinylidene fluoride #7200 (manufactured by KUREHA CORPORATION) as a binder was used at 1.0 part by weight as a binder solid content, and NMP as a solvent was additionally added so as to be in a total amount of 40 parts by weight.

[Example 1-5]

The graphene dispersion (3.0% by mass) prepared in Synthesis Example 6 as a conductive auxiliary was added at 0.5 parts by weight as a graphene solid content, 100 parts by weight of $LiNi_{0.5}Co_{0.2}Mn_{0.3}O_2$ (NCM) (manufactured by Yumicore, granulated body having a median diameter of 10 $\mu$m) as active material particles was added, and the mixture was treated at a peripheral speed of 40 m/s (shearing velocity: 40,000 per second) for 60 seconds using "FILMIX" (registered trademark) Model 30-30 (PRIMIX Corporation). Mixing was performed at a rotational speed of 30 RPM for 30 minutes using a planetary mixer. Next, polyvinylidene fluoride #7200 (manufactured by KUREHA CORPORATION) as a binder was added to the mixture at 1.0 part by weight as a binder solid content, NMP as a solvent was additionally added to the mixture so as to be in a total amount of 45 parts by weight, and then mixing was performed at a rotational speed of 15 RPM for 30 minutes using a planetary mixer to obtain an electrode paste. Here, the binder used was dissolved in NMP to prepare a 5.0% by mass solution in advance. This electrode paste was applied to an aluminum foil (thickness: 18 $\mu$m) using a doctor blade so that the basis weight was 15 mg/cm$^2$ and dried at 80°C for 30 minutes, then pressing was performed using a roll pressing machine, and vacuum drying was performed at 120°C for 5 hours using a vacuum dryer to obtain an electrode plate. The thickness of the electrode mixture layer (excluding aluminum foil) was set to 40 $\mu$m.

[Comparative Example 1-1]

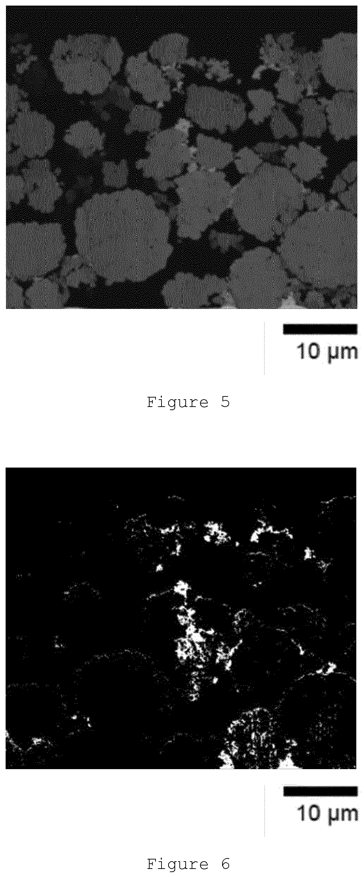

Acetylene black HS-100 (Denka Black (registered trademark) manufactured by Denka Company Limited) in the form of powder was added as a conductive auxiliary as it was at 0.5 parts by weight, polyvinylidene fluoride #7200 (manufactured by KUREHA CORPORATION) as a binder was added at 1.0 part by weight as a binder solid content, and the mixture was treated at a peripheral speed of 40 m/s (shearing velocity: 40,000 per second) for 60 seconds using "FILMIX" (registered trademark) Model 30-30 (PRIMIX Corporation). Here, the binder used was dissolved in NMP to prepare a 5% by mass solution in advance. Next, 100 parts by weight of $LiNi_{0.5}Co_{0.2}Mn_{0.3}O_2$ (median diameter: 10 $\mu$m) as an active material was added to the mixture, and mixing was performed at a rotational speed of 30 RPM for 30 minutes using a planetary mixer. NMP as a solvent was additionally added to the mixture so as to be in a total amount of 35 parts by weight, and then mixing was performed at a rotational speed of 15 RPM for 30 minutes using a planetary mixer to obtain an electrode paste. This electrode paste was applied to an aluminum foil (thickness: 18 $\mu$m) using a doctor blade and dried at 80°C for 30 minutes, then pressing was performed using a roll pressing machine, and vacuum drying was performed at 120°C for 5 hours using a vacuum dryer to obtain an electrode plate. The thickness of the electrode mixture layer (excluding aluminum foil) was set to 40 $\mu$m. The spreading resistance value distribution image (mapping image) before binarization and binarized image of the electrode plate attained by the method of Measurement Example 1 are illustrated in Figs. 5 and 6, respectively.

[Comparative Example 1-2]

An electrode plate was fabricated in the same manner as in Example 1-1 except that the graphene dispersion prepared in Synthesis Example 3 was used as a conductive auxiliary and NMP as a solvent was additionally added so as to be in a total amount of 48 parts by weight.

[Comparative Example 1-3]

An electrode plate was fabricated in the same manner as in Example 1-1 except that the graphene dispersion prepared in Synthesis Example 4 was used as a conductive auxiliary and NMP as a solvent was additionally added so as to be in a total amount of 61 parts by weight.

[Comparative Example 1-4]

An electrode plate was fabricated in the same manner as in Example 1-1 except that the graphene dispersion prepared in Synthesis Example 2 was used as a conductive auxiliary and NMP as a solvent was additionally added so as to be in a total amount of 60 parts by weight.

[Comparative Example 1-5]

An electrode plate was fabricated in the same manner as in Example 1-1 except that the graphene dispersion prepared in Synthesis Example 2 was used as a conductive auxiliary and NMP as a solvent was additionally added so as to be in a total amount of 70 parts by weight.

The average circularity coefficient for an area of less than 0.5 $\mu m^2$, average circularity coefficient for an area of 0.5 $\mu m^2$ or more, average circularity coefficient ratio, average aspect ratio, average distance between centers of gravity, average major axis/active material median diameter attained by image analysis of the electrode fabricated in each of Examples and Comparative Examples by the method of Measurement Example 1 and the results of battery performance evaluation performed by the method of Measurement Example 2 are summarized in Tables 1 and 2.

[Example 2-1]

The graphene dispersion 1 (4.0% by mass) prepared in Synthesis Example 2 as a conductive auxiliary was added at 0.5 parts by mass as a graphene solid content, 100 parts by mass of $LiNi_{0.5}Co_{0.2}Mn_{0.3}O_2$ (NCM) (manufactured by Yumicore, granulated body having a median diameter of 10 $\mu m$) as active material particles was added, and mixing was performed at a rotational speed of 30 RPM for 30 minutes using a planetary mixer. Next, the fibrous carbon dispersion 1 prepared in Synthesis Example 7 was added to the mixture at 0.5 parts by mass as a solid content, and the mixture was treated at a peripheral speed of 40 m/s (shearing velocity: 40,000 per second) for 60 seconds using "FILMIX" (registered trademark) Model 30-30 (PRIMIX Corporation). After that, polyvinylidene fluoride #7200 (manufactured by KUREHA CORPORATION) as a binder solution (5.0% by mass) was added to the mixture at 1.0 part by mass as a solid content, NMP as a solvent was additionally added to the mixture so as to be in a total amount of 50 parts by mass, and the mixture was treated at a peripheral speed of 40 m/s (shearing velocity: 40,000 per second) for 60 seconds using "FILMIX" (registered trademark) Model 30-30 (PRIMIX Corporation) to obtain an electrode paste. This electrode paste was applied to an aluminum foil (thickness: 18 $\mu m$) using a doctor blade so that the basis weight was 1.5 mg/cm$^2$ and dried at 80°C for 30 minutes, then pressing was performed using a roll pressing machine, and vacuum drying was performed at 120°C for 5 hours using a vacuum dryer to obtain an electrode. The thickness of the electrode mixture layer (excluding aluminum foil) was set to 40 $\mu m$. The spreading resistance value distribution image (mapping image) before binarization and binarized image of the electrode plate attained by the method of Measurement Example 1 are illustrated in Figs. 7 and 8, respectively.

[Example 2-2]

An electrode plate was fabricated under the same conditions as in Example 2-1 except that the graphene dispersion 1 (4.0% by mass) prepared in Synthesis Example 2 as a conductive auxiliary was added at 0.15 parts by mass as a graphene solid content, the fibrous carbon dispersion 1 prepared in Synthesis Example 7 as a conductive auxiliary was added at 0.35 parts by mass as a solid content, and NMP as a solvent was additionally added so as to be in a total amount of 30 parts by mass.

[Example 2-3]

An electrode plate was fabricated under the same conditions as in Example 2-1 except that the graphene dispersion 1 (4.0% by mass) prepared in Synthesis Example 2 as a conductive auxiliary was added at 0.35 parts by mass as a graphene solid content, the fibrous carbon dispersion 1 prepared in Synthesis Example 7 as a conductive auxiliary was added at 0.15 parts by mass as a solid content, and NMP as a solvent was additionally added so as to be in a total amount of 33 parts by mass.

[Example 2-4]

An electrode plate was fabricated under the same conditions as in Example 2-1 except that the graphene dispersion 1 (4.0% by mass) prepared in Synthesis Example 2 as a conductive auxiliary was added at 0.25 parts by mass as a graphene solid content, the fibrous carbon dispersion 1 prepared in Synthesis Example 7 as a conductive auxiliary was added at 0.25 parts by mass as a solid content, and NMP as a solvent was additionally added so as to be in a total amount of 32 parts by mass.

[Example 2-5]

An electrode plate was fabricated under the same conditions as in Example 2-1 except that the graphene dispersion 1 (4.0% by mass) prepared in Synthesis Example 2 as a conductive auxiliary was added at 0.5 parts by mass as a graphene solid content, the fibrous carbon dispersion 2 (4.0% by mass) prepared in Synthesis Example 8 as a conductive auxiliary was added at 0.5 parts by mass as a solid content, and NMP as a solvent was additionally added so as to be in a total amount of 50 parts by mass.

[Example 2-6]

An electrode plate was fabricated under the same conditions as in Example 2-1 except that the graphene dispersion 3 (4.0% by mass) prepared in Synthesis Example 4 as a conductive auxiliary was added at 0.25 parts by mass as a graphene solid content, the fibrous carbon dispersion 1 prepared in Synthesis Example 7 as a conductive auxiliary was added at 0.25 parts by mass as a solid content, and NMP as a solvent was additionally added so as to be in a total amount of 33 parts by mass.

[Example 2-7]

An electrode plate was fabricated under the same conditions as in Example 2-1 except that the graphene dispersion 1 (4.0% by mass) prepared in Synthesis Example 2 as a conductive auxiliary was added at 0.25 parts by mass as a graphene solid content, the fibrous carbon dispersion 3 prepared in Synthesis Example 9 as a conductive auxiliary was added at 0.25 parts by mass as a solid content, and NMP as a solvent was additionally added so as to be in a total amount of 31 parts by mass.

[Comparative Example 2-1]

Acetylene black HS-100 (Denka Black (registered trademark) manufactured by Denka Company Limited) in the form of powder was added as a conductive auxiliary as it was at 1.0 part by mass, polyvinylidene fluoride #7200 (manufactured by KUREHA CORPORATION) as a binder solution (5.0% by mass) was added at 1.0 part by mass as a binder solid content, and the mixture was treated at a peripheral speed of 40 m/s (shearing velocity: 40,000 per second) for 60 seconds using "FILMIX" (registered trademark) Model 30-30 (PRIMIX Corporation). Next, 100 parts by mass of $LiNi_{0.5}Co_{0.2}Mn_{0.3}O_2$ (median diameter: 10 $\mu$m) as an active material was added to the mixture, and mixing was performed at a rotational speed of 30 RPM for 30 minutes using a planetary mixer. NMP as a solvent was additionally added to the mixture so as to be in a total amount of 35 parts by mass, and then mixing was performed at a rotational speed of 1.5 RPM for 30 minutes using a planetary mixer to obtain an electrode paste. This electrode paste was applied to an aluminum foil (thickness: 18 $\mu$m) using a doctor blade and dried at 80°C for 30 minutes, then pressing was performed using a roll pressing machine, and vacuum drying was performed at 120°C for 5 hours using a vacuum dryer to obtain an electrode. The thickness of the electrode mixture layer (excluding aluminum foil) was set to 40 $\mu$m.

[Comparative Example 2-2]

An electrode plate was fabricated in the same manner as in Comparative Example 2-1 except that the fibrous carbon dispersion 1 prepared in Synthesis Example 5 as a conductive auxiliary was used instead of using acetylene black in the form of powder as it was and NMP as a solvent was additionally added so as to be in a total amount of 35 parts by mass. The binarized image of the electrode plate attained by the method of Measurement Example 1 is illustrated in Fig. 10.

[Comparative Example 2-3]

An electrode plate was fabricated in the same manner as in Comparative Example 2-1 except that the fibrous carbon dispersion 2 prepared in Synthesis Example 8 as a conductive auxiliary was used instead of using acetylene black in the form of powder as it was and NMP as a solvent was additionally added so as to be in a total amount of 35 parts by mass.

[Comparative Example 2-4]

Acetylene black HS-100 (Denka Black (registered trademark) manufactured by Denka Company Limited) in the form of powder was added as a conductive auxiliary as it was at 0.5 parts by mass, polyvinylidene fluoride #7200 (manufactured by KUREHA CORPORATION) as a binder solution (5.0% by mass) was added at 1.0 part by mass as a binder solid content, and the mixture was treated at a peripheral speed of 40 m/s (shearing velocity: 40,000 per second) for 60 seconds using "FILMIX" (registered trademark) Model 30-30 (PRIMIX Corporation). Next, the fibrous carbon dispersion 1 prepared in Synthesis Example 7 was added to the mixture at 0.5 parts by mass as a solid content, and the mixture was treated at a peripheral speed of 40 m/s (shearing velocity: 40,000 per second) for 60 seconds using "FILMIX" (registered trademark) Model 30-30 (PRIMIX Corporation). Next, 100 parts by mass of $LiNi_{0.5}Co_{0.2}Mn_{0.3}O_2$ (median diameter: 10 $\mu$m) as an active material was added to the mixture, and mixing was performed at a rotational speed of 30 RPM for 30 minutes using a planetary mixer. NMP as a solvent was additionally added to the mixture so as to be in a total amount of 35 parts by mass, and then mixing was performed at a rotational speed of 1.5 RPM for 30 minutes using a planetary mixer to obtain an electrode paste. This electrode paste was applied to an aluminum foil (thickness: 18 $\mu$m) using a doctor blade and dried at 80°C for 30 minutes, then pressing was performed using a roll pressing machine, and vacuum drying was performed at 120°C for 5 hours using a vacuum dryer to obtain an electrode. The thickness of the electrode mixture layer (excluding aluminum foil) was set to 40 $\mu$m.

[Comparative Example 2-5]

An electrode plate was fabricated under the same conditions as in Example 2-1 except that the graphene dispersion 2 (4.0% by mass) prepared in Synthesis Example 3 was used as a conductive auxiliary and NMP as a solvent was additionally added so as to be in a total amount of 50 parts by mass.

The average circularity coefficient for an area of less than 0.5 $\mu$m$^2$, average circularity coefficient for an area of 0.5 $\mu$m$^2$ or more, average circularity coefficient ratio, average aspect ratio, average distance between centers of gravity, average major axis/active material median diameter attained by image analysis of the electrode fabricated in each of Examples and Comparative Examples by the method of Measurement Example 1 and the results of battery performance evaluation performed by the method of Measurement Example 2 are summarized in Tables 3 and 4.

[Table 1]

| | Conductive auxiliary used in electrode paste preparation | Active material particles | Conductive auxiliary | | | Binder | Solvent | Solid concentration in electrode paste [%] |
|---|---|---|---|---|---|---|---|---|
| | | NCM | Acetylene black | Fibrous carbon | Graphene | Polyvinylidene fluoride | NMP | |
| Example 1-1 | Graphene dispersion 1 (Synthesis Example 2) | 100 | - | - | 0.5 | 1 | 44 | 70 |
| Example 1-2 | Graphene dispersion 1 (Synthesis Example 2) + Graphene dispersion 4 (Synthesis Example 5) | 100 | - | - | 0.5 | 1 | 43 | 70 |
| Example 1-3 | Graphene dispersion 1 (Synthesis Example 2) | 100 | - | - | 1.0 | 1 | 50 | 67 |
| Example 1-4 | Graphene dispersion 1 (Synthesis Example 2) | 100 | - | - | 0.2 | 1 | 40 | 72 |
| Example 1-5 | Graphene dispersion 5 (Synthesis Example 6) | 100 | - | - | 0.5 | 1 | 45 | 69 |
| Comparative Example 1-1 | - | 100 | 0.5 | - | - | 1 | 35 | 74 |
| Comparative Example 1-2 | Graphene dispersion 2 (Synthesis Example 3) | 100 | - | - | 0.5 | 1 | 48 | 68 |
| Comparative Example 1-3 | Graphene dispersion 3 (Synthesis Example 4) | 100 | - | - | 0.5 | 1 | 61 | 63 |
| Comparative Example 1-4 | Graphene dispersion 1 (Synthesis Example 2) | 100 | - | - | 0.5 | 1 | 60 | 63 |
| Comparative Example 1-5 | Graphene dispersion 1 (Synthesis Example 2) | 100 | - | - | 0.5 | 1 | 70 | 59 |

[Table 2]

| | Image analysis result | | | | | | Battery performance evaluation | | |
|---|---|---|---|---|---|---|---|---|---|
| | | | | | | | Output characteristic | | Lifespan |
| | Average circularity coefficient (less than 0.5 $\mu m^2$) | Average circularity coefficient (0.5 $\mu m^2$ or more) | Circularity coefficient ratio | Average aspect ratio | Average distance between centers of gravity ($\mu m$) | Average major axis/median diameter | Discharge capacity 1C (3 cycles) [mAh/g] | Discharge capacity 5C (3 cycles) [mAh/g] | Discharge capacity 1C (300 cycles) [mAh/g] |
| Example 1-1 | 0.18 | 0.17 | 1.06 | 2.73 | 1.46 | 0.29 | 155 | 109 | 116 |
| Example 1-2 | 0.18 | 0.18 | 1.00 | 2.63 | 1.94 | 0.36 | 153 | 126 | 122 |
| Example 1-3 | 0.17 | 0.16 | 1.06 | 2.51 | 1.25 | 0.30 | 158 | 135 | 112 |
| Example 1-4 | 0.16 | 0.16 | 1.00 | 2.53 | 1.87 | 0.28 | 153 | 102 | 127 |
| Example 1-5 | 0.17 | 0.17 | 1.00 | 2.78 | 1.73 | 0.31 | 157 | 115 | 121 |
| Comparative Example 1-1 | 0.23 | 0.25 | 0.92 | 1.65 | 1.21 | 0.22 | 148 | 46 | 105 |
| Comparative Example 1-2 | 0.29 | 0.29 | 1.00 | 1.68 | 1.34 | 0.18 | 147 | 75 | 98 |
| Comparative Example 1-3 | 0.34 | 0.32 | 1.06 | 1.20 | 2.65 | 0.14 | 143 | 68 | 87 |
| Comparative Example 1 -4 | 0.23 | 0.22 | 1.05 | 1.70 | 3.21 | 0.21 | 148 | 78 | 101 |
| Comparative Example 1-5 | 0.32 | 0.30 | 1.07 | 1.40 | 3.56 | 0.15 | 145 | 75 | 97 |

[Table 3]

| | Conductive auxiliary used in electrode paste preparation | Composition of electrode (parts by mass) | | | | | | Solid concentration in electrode paste [%] |
|---|---|---|---|---|---|---|---|---|
| | | Active material particles | Conductive auxiliary | | | Binder | Solvent | |
| | | NCM | Acetylene black | Fibrous carbon | Graphene | Polyvinylidene fluoride | NMP | |
| Example 2-1 | Graphene dispersion 1 (Synthesis Example 2)/fibrous carbon dispersion 1 (Synthesis Example 7) | 100 | - | 0.5 | 0.5 | 1 | 50 | 67 |
| Example 2-2 | Graphene dispersion 1 (Synthesis Example 2)/fibrous carbon dispersion 1 (Synthesis Example 7) | 100 | - | 0.35 | 0.15 | 1 | 30 | 77 |
| Example 2-3 | Graphene dispersion 1 (Synthesis Example 2)/fibrous carbon dispersion 1 (Synthesis Example 7) | 100 | - | 0.15 | 0.35 | 1 | 33 | 75 |
| Example 2-4 | Graphene dispersion 1 (Synthesis Example 2)/fibrous carbon dispersion 1 (Synthesis Example 7) | 100 | - | 0.25 | 0.25 | 1 | 32 | 76 |
| Example 2-5 | Graphene dispersion 1 (Synthesis Example 2)/fibrous carbon dispersion 2 (Synthesis Example 8) | 100 | - | 0.5 | 0.5 | 1 | 50 | 67 |
| Example 2-6 | Graphene dispersion 3 (Synthesis Example 4)/fibrous carbon dispersion 1 (Synthesis Example 7) | 100 | - | 0.25 | 0.25 | 1 | 33 | 75 |
| Example 2-7 | Graphene dispersion 1 (Synthesis Example 2)/fibrous carbon dispersion 3 (Synthesis Example 9) | 100 | - | 0.25 | 0.25 | 1 | 31 | 77 |
| Comparative Example 2-1 | Acetylene black powder | 100 | 1 | - | - | 1 | 35 | 74 |
| Comparative Example 2-2 | Fibrous carbon dispersion 1 (Synthesis Example 7) | 100 | - | 1.0 | - | 1 | 35 | 74 |

EP 3 852 168 A1

| | Conductive auxiliary used in electrode paste preparation | Composition of electrode (parts by mass) | | | | | | Solid concentration in electrode paste [%] |
|---|---|---|---|---|---|---|---|---|
| | | Active material particles | Conductive auxiliary | | | Binder | Solvent | |
| | | NCM | Acetylene black | Fibrous carbon | Graphene | Polyvinylidene fluoride | NMP | |
| Comparative Example 2-3 | Fibrous carbon dispersion 2 (Synthesis Example 8) | 100 | - | 1.0 | - | 1 | 35 | 74 |
| Comparative Example 2-4 | Acetylene black powder/fibrous carbon dispersion 1 (Synthesis Example 7) | 100 | 0.5 | 0.5 | - | 1 | 35 | 74 |
| Comparative Example 2-5 | Graphene dispersion 2 (Synthesis Example 3)/fibrous carbon dispersion 1 (Synthesis Example 7) | 100 | - | 0.5 | 0.5 | 1 | 50 | 67 |

[Table 4]

| | Image analysis result | | | | | | Battery performance evaluation | | |
| | | | | | | | Output characteristic | | Lifespan |
| | Average circularity coefficient (less than 0.5 μm²) | Average circularity coefficient (0.5 μm² or more) | Circularity coefficient ratio | Average aspect ratio | Average distance between centers of gravity (μm) | Average major axis/median diameter | Discharge capacity 1C (3 cycles) [mAh/g] | Discharge capacity 5C (3 cycles) [mAh/g] | Discharge capacity 1C (300 cycles) [mAh/g] |
|---|---|---|---|---|---|---|---|---|---|
| Example 2-1 | 0.36 | 0.17 | 2.12 | 2.27 | 1.25 | 0.34 | 159 | 137 | 129 |
| Example 2-2 | 0.30 | 0.20 | 1.50 | 2.10 | 1.21 | 0.38 | 159 | 139 | 131 |
| Example 2-3 | 0.40 | 0.13 | 3.08 | 2.40 | 1.38 | 0.39 | 159 | 135 | 129 |
| Example 2-4 | 0.36 | 0.18 | 2.00 | 2.20 | 1.41 | 0.34 | 158 | 131 | 130 |
| Example 2-5 | 0.50 | 0.13 | 3.85 | 2.10 | 1.51 | 0.31 | 156 | 128 | 123 |
| Example 2-6 | 0.35 | 0.19 | 1.84 | 2.09 | 1.45 | 0.36 | 157 | 128 | 128 |
| Example 2-7 | 0.40 | 0.25 | 1.60 | 2.02 | 1.65 | 0.30 | 155 | 126 | 121 |
| Comparative Example 2-1 | 0.37 | 0.41 | 0.90 | 1.16 | 1.41 | 0.22 | 149 | 50 | 108 |
| Comparative Example 2-2 | 0.40 | 0.39 | 1.03 | 1.35 | 1.33 | 0.40 | 149 | 92 | 110 |
| Comparative Example 2-3 | 0.70 | 0.69 | 1.01 | 1.22 | 1.73 | 0.41 | 149 | 98 | 107 |
| Comparative Example 2-4 | 0.34 | 0.65 | 0.52 | 1.18 | 1.32 | 0.35 | 149 | 74 | 108 |
| Comparative Example 2-5 | 0.36 | 0.40 | 0.90 | 1.19 | 1.82 | 0.34 | 147 | 75 | 98 |

DESCRIPTION OF REFERENCE SIGNS

1: Positive electrode active material particles
2: Conductive auxiliary
3: Void and binder
4: Conductive material portion

**Claims**

1. An electrode for secondary battery comprising a mixture layer containing graphene and active material particles for secondary battery containing at least lithium and nickel, wherein
   an average aspect ratio of conductive material portions in a cross section of the electrode for secondary battery identified by following method is 2.0 or more:
   the method for identifying a conductive material portion:

   (1) a spreading resistance value at a mixture layer portion is acquired by scanning spreading resistance microscopy, and
   (2) a total data number of the spreading resistance values is taken as N, the spreading resistance values are sorted in ascending order, and a 0.1Nth spreading resistance value (rounded down to a nearest decimal point of 0.1N) is taken as R, and
   binarization processing is performed on two-dimensional data of a spreading resistance value using 0.7R as a threshold value and a portion having a resistance value of 0.7R or less in a binarized image attained is taken as a conductive material portion.

2. The electrode for secondary battery according to claim 1, wherein a circularity coefficient of the conductive material portion is 0.20 or less.

3. The electrode for secondary battery according to claim 1 or 2, wherein an average distance between centers of gravity of the conductive material portions is 1.4 $\mu$m or more.

4. The electrode for secondary battery according to any one of claims 1 to 3, wherein a value attained by dividing an average value of major axes of the conductive material portions by a median diameter of the active material particles for secondary battery is 0.25 or more.

5. The electrode for secondary battery according to any one of claims 1 to 4, wherein the mixture layer further contains fibrous carbon.

6. The electrode for secondary battery according to claim 5, wherein a ratio (circularity coefficient ratio) of an average circularity coefficient of particles having an area of less than 0.5 $\mu$m$^2$ in the conductive material portions to an average circularity coefficient of particles having an area of 0.5 $\mu$m$^2$ or more in the conductive material portions is 1.50 or more.

7. The electrode for secondary battery according to claim 6, wherein an average circularity coefficient of particles having an area of 0.5 $\mu$m$^2$ or more in the conductive material portions is 0.20 or less.

8. The electrode for secondary battery according to claim 6 or 7, wherein an average circularity coefficient of particles having an area of less than 0.5 $\mu$m$^2$ in the conductive material portions is 0.30 or more.

9. The electrode for secondary battery according to any one of claims 6 to 8, wherein an average distance between centers of gravity of the conductive material portions is 1.60 or less.

10. The electrode for secondary battery according to any one of claims 6 to 9, wherein a size of the graphene in a plane direction is 0.5 $\mu$m or more and 5.0 $\mu$m or less.

11. The electrode for secondary battery according to any one of claims 6 to 10, wherein a length of the fibrous carbon

is 5.0 μm or more and 50 μm or less.

12. The electrode for secondary battery according to any one of claims 6 to 11, wherein an outer diameter of the fibrous carbon is 5.0 nm or more and 20 nm or less.

13. e electrode for secondary battery according to any one of claims 6 to 12, wherein the mixture layer further contains a dispersant.

14. The electrode for secondary battery according to any one of claims 1 to 13, wherein an average circularity coefficient of the active material particles for secondary battery is 0.8 or more and 1.0 or less.

15. The electrode for secondary battery according to any one of claims 1 to 14, wherein a particle size of the active material particles for secondary battery is 1.0 μm or more and 20 μm or less.

16. The electrode for secondary battery according to any one of claims 1 to 15, wherein the graphene is subjected to a surface treatment.

17. The electrode for secondary battery according to any one of claims 1 to 16, wherein the active material particles for secondary battery are a granulated body.

18. A secondary battery comprising the electrode for secondary battery according to any one of claims 1 to 17.

10 µm

Figure 1

10 µm

Figure 2

10 µm

Figure 3

10 µm

Figure 4

Figure 5

Figure 6

Figure 7

Figure 8

Figure 9

Figure 10

EP 3 852 168 A1

# INTERNATIONAL SEARCH REPORT

International application No.

PCT/JP2019/035201

**A. CLASSIFICATION OF SUBJECT MATTER**

Int.Cl. H01M4/131(2010.01)i, H01M4/525(2010.01)i, H01M4/62(2006.01)i

According to International Patent Classification (IPC) or to both national classification and IPC

**B. FIELDS SEARCHED**

Minimum documentation searched (classification system followed by classification symbols)

Int.Cl. H01M4/131, H01M4/525, H01M4/62

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2017-218373 A (TORAY INDUSTRIES, INC.) 14 December 2017 (Family: none) | 1–18 |
| A | WO 2017/061323 A1 (TORAY INDUSTRIES, INC.) 13 April 2017 & US 2018/0277829 A1 & EP 3361530 A1 & CN 108140806 A & KR 10-2018-0063151 A | 1–18 |

☒ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 November 2019 (28.11.2019) | 10 December 2019 (10.12.2019) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2019/035201

| C (Continuation). DOCUMENTS CONSIDERED TO BE RELEVANT | | |
|---|---|---|
| Category* | Citation of document, with indication, where appropriate, of the relevant passages | Relevant to claim No. |
| A | WO 2017/047523 A1 (TORAY INDUSTRIES, INC.) 23 March 2017 & US 2018/0269465 A1 & EP 3358650 A1 & CN 108028352 A | 1-18 |
| A | JP 2015-215947 A (KANEKA CORP.) 03 December 2015 (Family: none) | 1-18 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012014838 A
- JP 2015215947 A
- WO 2016500895 A
- JP 2018160418 A